# EUROPEAN PATENT APPLICATION

(11) **EP 4 851 490 A1**
(43) Date of publication of application: **09.12.2026**
(21) Application number: 25748079.8
(22) Date of filing: 28.01.2025
(51) Int. Cl.: F16H 25/22, F16C 19/16, F16C 19/36, F16C 33/58, F16C 35/07, F16C 35/063

(54) **BALL SCREW DEVICE**

(30) Priority: 30.01.2024 JP 2024012032; 30.01.2024 JP 2024012062
(71) Applicant: NSK Ltd., Tokyo 141-8560 (JP)
(72) Inventor: IWAO Takuya, Fujisawa-shi, Kanagawa 251-8501 (JP)
(74) Representative: Müller-Boré & Partner Patentanwälte PartG mbB
(86) International application number: PCT/JP2025/002578
(87) International publication number: WO 2025/164608

(57) **Abstract**

A housing (30) has a first axial surface (AX1) facing in a first direction and a second axial surface (AX2) facing in a second direction. A load from a ball screw (20) in the second direction is received on the first axial surface (AX1) via an inner ring (41), rolling elements (43), and an outer ring (42). A bearing (40) or the ball screw (20) has a third axial surface (AX3) disposed so as to face the second axial surface (AX2). Relative movement in a circumferential direction occurs between the second axial surface (AX2) and the third axial surface (AX3) during rotation of a screw shaft (21) or a nut (22) relative to the housing (30). Axial relative movement of the inner ring (41) in the first direction relative to the outer ring (42) is restricted based on an axial positional relationship between the second axial surface (AX2) and the third axial surface (AX3).

## Description

### TECHNICAL FIELD

The present invention relates to a ball screw device.

Priority is claimed on Japanese Patent Application No. 2024-012032 and Japanese Patent Application No. 2024-012062, filed January 30, 2024, the content of which is incorporated herein by reference.

### BACKGROUND ART

A ball screw includes a screw shaft (shaft), a nut, and a plurality of balls disposed between the screw shaft and the nut. In an example of a ball screw device, rotational motion of an output shaft of a motor is converted into linear motion by the ball screw. Generally, in a ball screw device, a bearing is installed between a ball screw and a housing in order to rotatably support the ball screw (for example, refer to Patent Document 1).

### Citation List

### Patent Document

Patent Document 1: Japanese Unexamined Patent Application, First Publication No. 2004-284444

### SUMMARY OF INVENTION

### Technical Problem

In a ball screw device of a high-load specification, there is known a technology using, as a bearing between a ball screw and a housing, a bearing such as a tapered roller bearing capable of receiving both a radial load and an axial load. In a ball screw device using a bearing for a radial load such as a general-purpose ball bearing, a large-sized bearing for high-load applications is required, which tends to increase the size of the device. In a ball screw device using a bearing suitable for both a radial load and an axial load, enlargement of the device is avoided even in a high-load specification.

However, in such a ball screw device, for example, axial relative movement is likely to occur between an inner ring and an outer ring in a bearing. The axial relative movement between the inner ring and the outer ring may cause damage to the bearing due to contact or the like of an end portion of the outer ring with an outer surface of a rolling element. In addition, abnormal noise may occur in the ball screw device.

In addition, ball screw devices are increasingly used in various fields, and a compact and simple configuration is desired.

An object of the present invention is to provide a ball screw device which is preferably applied to high-load specifications, is advantageous for downsizing and reduction in assembly man-hours, and/or is excellent in high reliability and long life. Solution to Problem

A ball screw device according to an aspect of the present invention includes a ball screw having a screw shaft, a nut, and a plurality of balls; a housing supporting the ball screw; and a bearing having an inner ring, an outer ring, and a plurality of rolling elements. The bearing is disposed between the ball screw and the housing, and has a structure capable of receiving a radial load and an axial load. The housing has a first axial surface facing in a first direction and a second axial surface facing in a second direction. An axial load from the ball screw in the second direction is received on the first axial surface via the inner ring, the rolling elements, and the outer ring. The bearing or the ball screw has a third axial surface disposed so as to face the second axial surface. Relative movement in a circumferential direction occurs between the second axial surface and the third axial surface during rotation of the screw shaft or the nut relative to the housing. Axial relative movement of the inner ring in the first direction relative to the outer ring is restricted based on an axial positional relationship between the second axial surface and the third axial surface.

A ball screw device according to another aspect of the present invention includes a ball screw having a screw shaft, a nut, and a plurality of balls; and a support body supporting the ball screw. The ball screw has an inner ring raceway surface provided on the screw shaft or the nut, and the support body has an outer ring raceway surface. A plurality of tapered rollers serving as rolling elements are disposed between the inner ring raceway surface and the outer ring raceway surface.

### Advantageous Effects of Invention

According to the ball screw device of an aspect of the present invention, it is possible to provide a ball screw device that is preferably applied to high-load specifications, is advantageous for downsizing or reduction in assembly man-hours, and/or is excellent in high reliability and long life.

### BRIEF DESCRIPTION OF DRAWINGS

[FIG. 1] A schematic cross-sectional view showing an example of a ball screw device according to a first embodiment, in which a roller bearing is applied.
[FIG. 2] A schematic cross-sectional view showing an example in which an angular ball bearing is applied.
[FIG. 3] An explanatory view of a contact angle α, in which part (a) relates to a tapered roller bearing, and part (b) relates to an angular ball bearing.
[FIG. 4] An explanatory view of dimensional values in a tapered roller bearing.
[FIG. 5] A partially enlarged schematic cross-sectional view showing the ball screw device according to the first embodiment.
[FIG. 6] A partially enlarged schematic cross-sectional view showing a ball screw device according to a second embodiment.
[FIG. 7] A partially enlarged schematic cross-sectional view showing a ball screw device according to a third embodiment.
[FIG. 8] A partially enlarged schematic cross-sectional view showing a modification example of the third embodiment.
[FIG. 9] A partially enlarged schematic cross-sectional view showing a ball screw device according to a fourth embodiment.
[FIG. 10] A partially enlarged schematic cross-sectional view showing ball screw devices, in which parts (a), (b), and (c) show ball screw devices according to fifth, sixth, and seventh embodiments, respectively.
[FIG. 11] A schematic cross-sectional view showing an example of a ball screw device according to an eighth embodiment, in which a roller bearing is applied.
[FIG. 12] A schematic cross-sectional view showing an example in which an angular ball bearing is applied.
[FIG. 13] A partially enlarged schematic cross-sectional view showing ball screw devices, in which parts (a), (b), and (c) show ball screw devices according to eighth, ninth, and tenth embodiments, respectively.
[FIG. 14] A partially enlarged schematic cross-sectional view showing ball screw devices, in which parts (a), (b), and (c) show ball screw devices according to eleventh, twelfth, and thirteenth embodiments, respectively.
[FIG. 15] A schematic cross-sectional view showing a ball screw device according to a fourteenth embodiment.
[FIG. 16] A schematic cross-sectional view showing an example of a nut.
[FIG. 17] A schematic cross-sectional view showing an example in which an angular ball bearing is applied.
[FIG. 18] A schematic cross-sectional view showing a ball screw device according to a fifteenth embodiment.
[FIG. 19] A schematic cross-sectional view showing an example in which an angular ball bearing is applied.

### DESCRIPTION OF EMBODIMENTS

Embodiments of the present invention will be described with reference to the drawings. In an embodiment, for example, a ball screw device is incorporated into various mechanical devices such as an electric brake device for a vehicle, an automatic manual transmission (AMT), and a positioning device for a machine tool, and is used for the purpose of converting rotational motion of a drive source such as an electric motor into linear motion to operate a driven portion (operation portion). As the electric brake device, it is possible to apply various types such as an electro-mechanical brake (EMB) that applies braking force via a ball screw driven by a motor, and an electro-hydraulic brake (EHB) that controls hydraulic pressure of a hydraulic brake via a ball screw driven by a motor. The ball screw device can also be applied to mechanical devices other than those described above.

In the following description, unless otherwise specified, an axial direction, a radial direction, and a circumferential direction refer to a direction along a central axis of the ball screw, a radial direction of the ball screw, and a direction around the central axis of the ball screw, respectively. In addition, along the central axis of the ball screw, an orientation from an input side toward an output side is referred to as a first direction (first orientation), and an orientation from the output side toward the input side is referred to as a second direction (second orientation), respectively.

### (First embodiment)

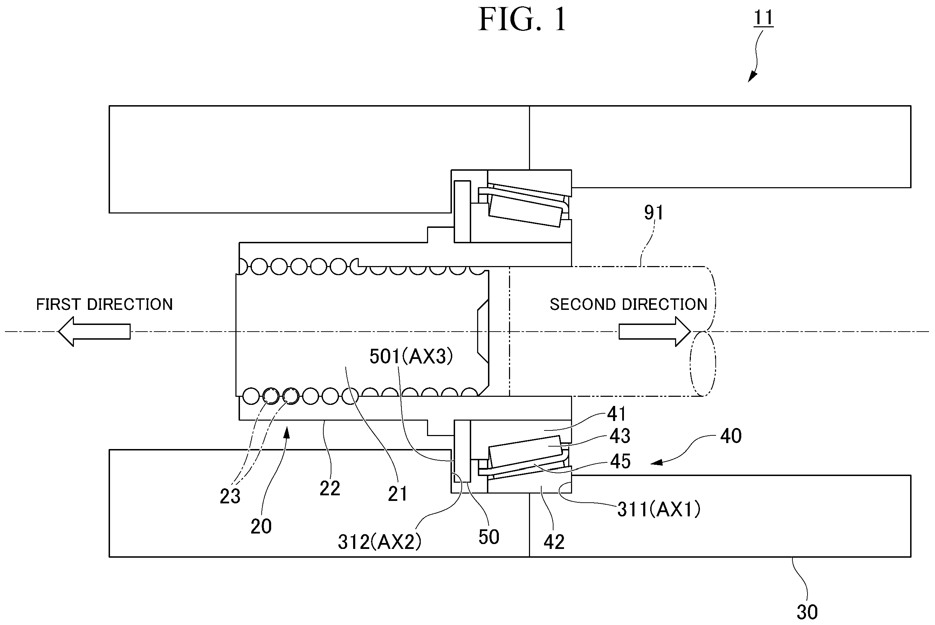

FIG. 1 is a schematic cross-sectional view of a ball screw device 11 according to a first embodiment. The ball screw device 11 includes a ball screw 20, a housing 30 supporting the ball screw 20, and a bearing 40 disposed between the ball screw 20 and the housing 30.

As shown in FIG. 1, the ball screw 20 includes a screw shaft (shaft) 21, a nut 22, and a plurality of balls 23 disposed between the screw shaft 21 and the nut 22. In an example, a first shaft 91, to which a drive force of a motor (not shown) is transmitted, is connected to the nut 22. In the ball screw 20, rotational motion is converted into linear motion. A speed reducer can also be additionally disposed between the ball screw 20 and the motor. Alternatively, a drive force is transmitted to the nut 22 via a speed reduction mechanism, which is disposed at a preferable position, using gears (including planetary gears and the like), pulleys, or the like. In an example in which the ball screw device 11 is applied to an electric brake device for a vehicle, a brake pad of the vehicle is operated against a brake disc in accordance with the linear motion. The ball screw 20 and the mechanism using the ball screw are not limited to this example, and various forms can be applied.

The screw shaft 21 has a shaft main body and a helical screw groove (helical outer circumferential rolling groove) provided on an outer circumferential surface of the shaft main body. In an example, at least a part of the screw shaft 21 is made of metal. The screw groove of the screw shaft 21 is formed by performing cutting or rolling on the outer circumferential surface of the shaft main body. In forming the screw groove, grinding can additionally be performed. The screw groove of the screw shaft 21 has a shape (groove bottom shape) of a Gothic arch groove or a circular arc groove, for example. The number of threads of the screw groove is set to one, two, or more. In another example, various forms can be applied to the screw shaft 21.

The nut 22 has a nut main body having a cylindrical shape, and a helical screw groove (helical inner circumferential rolling groove) provided on an inner circumferential surface of the nut main body. The screw shaft 21 is inserted and disposed inside the nut 22. In an example, at least a part of the nut 22 is made of metal. The screw groove of the nut 22 is formed by performing cutting or rolling on the inner circumferential surface of the nut main body. In forming the screw groove, grinding can additionally be performed. The screw groove shape (groove bottom shape) of the nut 22 corresponds to the groove shape of the screw shaft 21, and is, for example, a Gothic arch groove or a circular arc groove. The number of threads of the screw groove is set to one, two, or more. In another example, various forms can be applied to the nut 22.

The plurality of balls 23 are disposed between the screw shaft 21 and the nut 22. The plurality of balls 23 are disposed in a space (rolling path) formed based on opposing disposition of the screw groove of the screw shaft 21 and the screw groove of the nut 22. In FIG. 1, two balls 23 are indicated by two-dot chain lines. In practice, the ball screw 20 includes a large number of balls 23. In an example, the plurality of balls 23 are made of metal (steel or the like) or ceramic. The plurality of balls 23 roll inside the rolling path in accordance with relative rotation between the screw shaft 21 and the nut 22. In an example, the balls 23 return to a start point from an end point of the rolling path via a circulation path provided in the nut 22. The balls 23 disposed in the rolling path move while being subjected to a compressive load. The balls 23 disposed in the circulation path move as they are pushed by subsequent balls 23. The start point and the end point of the rolling path are switched in accordance with the direction of relative displacement (relative rotational direction) between the screw shaft 21 and the nut 22. In another example, the ball screw 20 can have a different structure for circulation of the balls 23.

The housing 30 supports the ball screw 20 via the bearing 40 or the like. Various support structures can be additionally applied as the housing 30. At least a part of the ball screw 20 is surrounded by the housing 30. At least a part of the ball screw 20 is disposed in an inner space of the housing 30. In an example, at least a part of the housing 30 is made of metal. In another example, at least a part of the housing 30 is made of a material other than metal. The housing 30 is fixed to a predetermined structure (not shown). In an example, the housing 30 has a substantially split structure. A split position of the housing 30 is suitably set in consideration of assembly steps. In another example, the housing 30 can have a different structure.

The bearing 40 has an inner ring 41, an outer ring 42, and a plurality of rolling elements 43 disposed between the inner ring 41 and the outer ring 42. The plurality of rolling elements 43 are held between the inner ring 41 and the outer ring 42 via a cage 45. The bearing 40 can additionally have a seal structure for enclosing a lubricant.

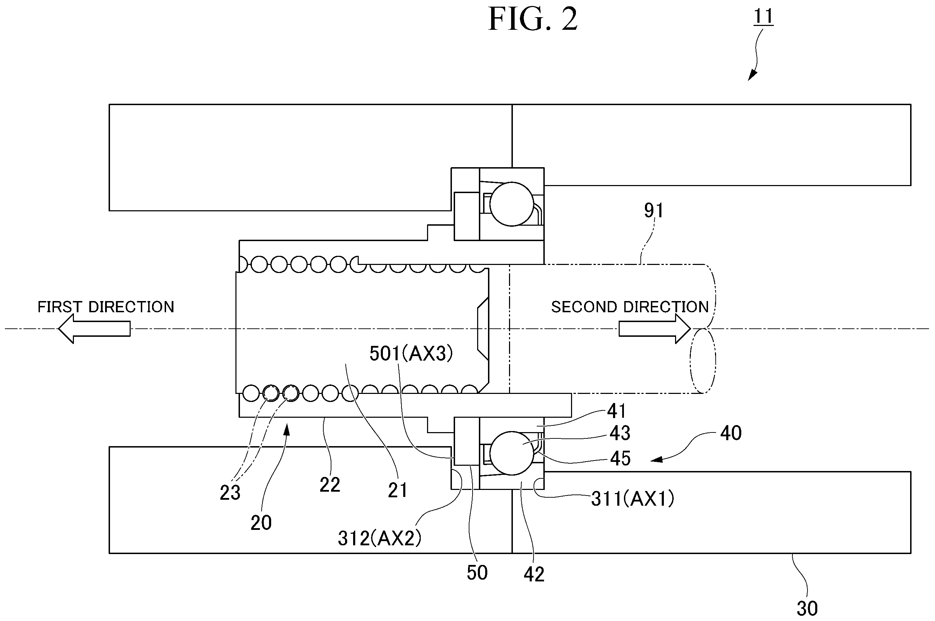

In the present embodiment, a bearing capable of receiving a radial load and an axial load is applied as the bearing 40. For example, the bearing 40 is a single-row tapered roller bearing or a single-row angular ball bearing. In the example shown in FIG. 1, the bearing 40 is a single-row tapered roller bearing, and rollers (tapered rollers) are used as the rolling elements 43. In another example shown in FIG. 2, the bearing 40 is a single-row angular ball bearing, and balls are used as the rolling elements 43. A tapered roller bearing has a higher load capacity than an angular ball bearing. An angular ball bearing is preferably applied to a higher-speed rotation specification than a tapered roller bearing. Use of a single bearing of this type (a configuration that avoids the use of two opposed bearings or a combination of two or more bearings) is advantageous for downsizing the ball screw device 11. Alternatively, other types of bearings can be used.

Generally, a tapered roller bearing is designed such that a raceway surface of an inner ring, a raceway surface of an outer ring, and apexes of the tapered rollers substantially converge at one point on the central axis of the bearing. The rollers have a substantially truncated cone shape. A tapered roller bearing can receive a radial load and a unidirectional axial load. In an example, the rollers are held by a pressed steel plate cage or a resin cage. In another example, the rollers are held by a pin-type cage or a different structure.

Generally, an angular ball bearing is designed such that a straight line connecting a contact point between an outer ring and balls to a contact point between an inner ring and balls has an inclination with respect to the radial direction of the bearing. An angular ball bearing can receive a radial load and a unidirectional axial load. In an example, the balls are held by a pressed steel plate cage or a resin (for example, polyamide) cage. In another example, the balls are held by a different structure.

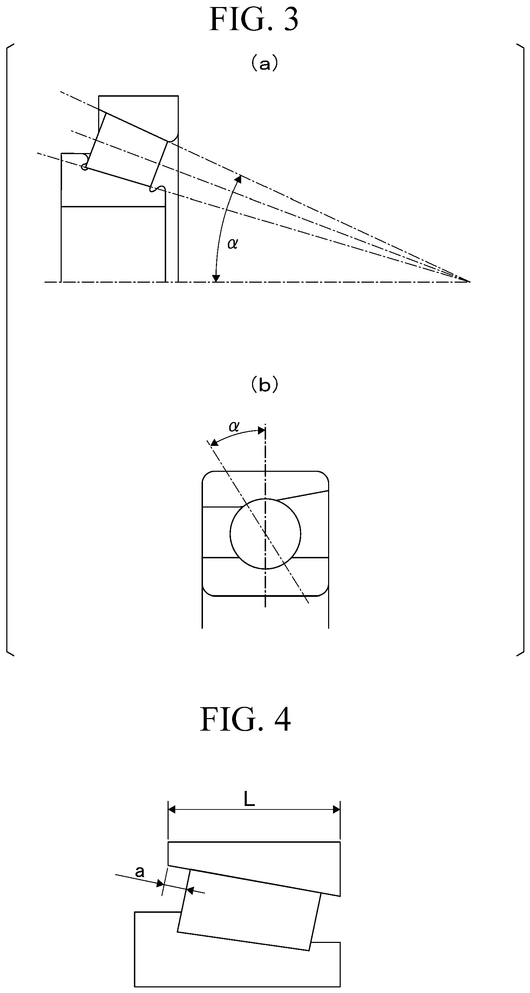

In the tapered roller bearing and the angular ball bearing, a contact angle α is suitably set as shown in FIG. 3. A bearing having a relatively small contact angle α generally has a relatively high load-bearing capacity against a radial load. A bearing having a relatively large contact angle α generally has a relatively high load-bearing capacity against an axial load.

In the present embodiment, the contact angle α (refer to FIG. 3(a)) of the tapered roller bearing used as the bearing 40 of the ball screw device 11 in FIG. 1 is set to approximately 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, or 35°, for example. In an example, a tapered roller bearing having a contact angle of 20° or larger is used in the ball screw device 11 of a high-load specification. In another example, a tapered roller bearing having a contact angle of 25° or larger is used in the ball screw device 11 of a higher-load specification. The foregoing numerical values are examples and are not limited thereto.

In the present embodiment, the contact angle α (refer to FIG. 3(b)) of the angular ball bearing used as the bearing 40 of the ball screw device 11 in FIG. 1 is set to approximately 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44°, or 45°, for example. In an example, an angular ball bearing having a contact angle of 27°, 32° or larger is used in the ball screw device 11 of a high-load specification. The foregoing numerical values are examples and are not limited thereto.

In the present embodiment, in an example of a single-row tapered roller bearing shown in FIG. 4, when an axial width of the outer ring is L and a distance between the rolling elements and an end portion of the outer ring is a, a/L is set to approximately 1/20, 1/18, 1/16, 1/14, 1/12, 1/10, 1/8, 1/6, or larger. In an example, a bearing in which a/L is 1/10 or larger is used. By suitably setting a correspondence relationship between the value of a/L and a design value of an allowable axial clearance (clearance 900, which will be described below), issues such as damage to the bearing 40 and abnormal noise due to axial relative movement are reliably prevented. The foregoing numerical values are examples and are not limited thereto.

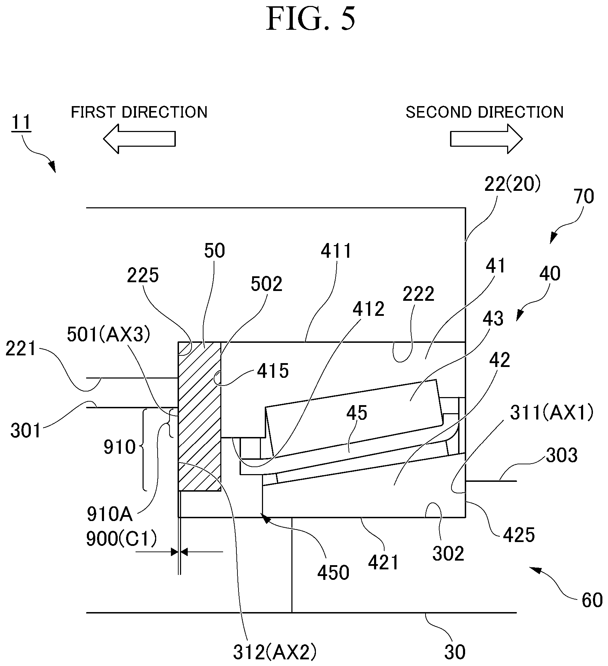

Returning to FIG. 1, in the present embodiment, the inner ring 41 of the bearing 40 is attached to the nut 22 of the ball screw 20, and the outer ring 42 of the bearing 40 is attached to the housing 30. Additionally and/or alternatively, various structures including another member (not shown) (thrust collar, C-shaped retaining ring, annular plate, or the like) for supporting a position of the inner ring 41 relative to the nut 22 in the axial direction can be applied. Similarly, various structures including another member (not shown) (thrust collar, C-shaped retaining ring, annular plate, or the like) for supporting a position of the outer ring 42 relative to the housing 30 in the axial direction can be applied. In the following description, an example in which a tapered roller bearing is applied as the bearing 40 is shown (FIGS. 5 to 10). An angular ball bearing can also be similarly applied as the bearing 40.

As shown in FIG. 5, an outer diameter of the bearing 40 is larger than an outer diameter of the nut 22. In another example, the outer diameter of the bearing 40 can be smaller than the outer diameter of the nut 22. In FIG. 5, the bearing 40 is disposed substantially radially outward of the nut 22. The nut 22 has outer surfaces 221 and 222 facing outward in the radial direction. The outer surface (outer circumferential surface) 222 of the nut 22 has an outer diameter corresponding to the diameter of a hole of the bearing 40 (inner diameter of the inner ring 41). A part of the nut 22 is inserted into the hole of the bearing 40 such that the outer surface 222 of the nut 22 and an inner surface (inner circumferential surface) 411 of the inner ring 41 face each other, whereby the nut 22 and the bearing 40 (inner ring 41) are fitted together. The inner surface 411 of the bearing 40 (inner ring 41) is supported by the outer surface 222 of the nut 22. In fitting between the nut 22 and the inner ring 41, a tightening allowance or a clearance (clearance fit) is suitably provided. In another example, a configuration in which the nut 22 and the inner ring 41 are integrally formed can be applied.

In the present embodiment, the nut 22 has an axial surface (axial wall surface) 225 facing in the second direction. The axial surface 225 is provided between the outer surface 221 and the outer surface 222 in the radial direction, and has a surface perpendicular to the axial direction, for example. The inner ring 41 of the bearing 40 has an axial surface (axial end surface) 415 facing in the first direction. The axial surface 415 is provided at an axial end portion of the inner ring 41 in the first direction and has a surface perpendicular to the axial direction, for example. In addition, the axial surface 415 is provided between the inner surface 411 and an outer surface 412 in the radial direction. The axial surface 225 of the nut 22 is disposed so as to face the axial end surface 415 of the inner ring 41.

In the present embodiment, the ball screw 20 or the bearing 40 includes a sliding member 50. The sliding member 50 is provided as a separate member from a main body (screw shaft main body/nut main body) of the ball screw 20 or a main body (inner ring/outer ring) of the bearing 40. The sliding member 50 has a ring shape, and has a first surface 501 facing in the first direction and a second surface 502 facing in the second direction. The sliding member 50 is disposed between the axial surface 225 of the nut 22 and the axial end surface 415 of the inner ring 41. The axial surface 225 of the nut 22 abuts the first surface 501 of the sliding member 50. The axial end surface 415 of the inner ring 41 abuts the second surface 502 of the sliding member 50. The sliding member 50 is fixed to the nut 22 and the inner ring 41 by being sandwiched between the nut 22 and the inner ring 41. The sliding member 50 is incorporated as a part of a second assembly (inner assembly, rotating body) 70. The second assembly 70 is rotatably supported by a first assembly (outer assembly, support body) 60. In the present embodiment, the first assembly 60 includes the housing 30, the outer ring 42, and the like. The second assembly 70 includes the nut 22, the inner ring 41, the sliding member 50, and the like. In an example, a member having a form similar to that of a sliding bearing is used as the sliding member 50. In another example, a member having a relatively simple form such as a spacer is used as the sliding member 50.

As shown in FIG. 5, the housing 30 has inner surfaces (inner wall surfaces) 301, 302, and 303 provided to surround the ball screw 20. The inner surface (inner circumferential surface) 302 is disposed between the inner surface 301 and the inner surface 303 in the axial direction. The inner surface 302 has an inner diameter corresponding to the outer diameter of the bearing 40 (outer diameter of the outer ring 42). The inner surfaces 301, 302, and 303 face a space in which the ball screw 20 and a structure connected to the ball screw 20 are disposed.

In the present embodiment, the housing 30 has an axial surface (axial wall surface, first axial surface AX1) 311 facing in the first direction, and an axial surface (axial wall surface, second axial surface AX2) 312 facing in the second direction. The axial surface 311 is provided between the inner surface 302 and the inner surface 303 in the radial direction and has a surface perpendicular to the axial direction, for example. The axial surface 312 is provided between the inner surface 302 and the inner surface 301 in the radial direction and has a surface perpendicular to the axial direction, for example.

The housing 30 is provided with a recessed portion 450 including a space surrounded by the inner surface 302, the axial surface 311, and the axial surface 312. The bearing 40 is disposed in the recessed portion 450. The bearing 40 is inserted into the recessed portion 450 of the housing 30 such that an outer surface 421 of the outer ring 42 and the inner surface 302 of the housing 30 face each other, and the bearing 40 (outer ring 42) and the housing 30 are fitted together. In fitting between the outer ring 42 and the housing 30, a tightening allowance or a clearance (clearance fit) is suitably provided. The outer surface (outer circumferential surface) 421 of the bearing 40 (outer ring 42) is supported by the inner surface 302 of the housing 30. The outer ring 42 has an axial surface (axial end surface) 425 facing in the second direction. The axial surface 425 is provided at an end portion of the outer ring 42 in the second direction, and has a surface perpendicular to the axial direction, for example. The axial surface 425 of the outer ring 42 and the axial surface 311 of the housing 30 face and abut each other. The end surface 425 of the outer ring 42 is supported by the axial surface 311 of the housing 30. In FIG. 5, the axial surface 312 of the housing 30 is an axial surface that is formed integrally with a main body of the housing 30, and faces in the second direction. The axial surface 312 (second axial surface AX2) of the housing 30 and the first surface 501 (third axial surface AX3) of the sliding member 50 are disposed so as to face each other. The axial surface 312 and the first surface 501 face and abut each other or face each other with a clearance therebetween.

In the present embodiment, during high-load driving, a high load (reaction force, axial load) toward the second direction acts (first mode, high-load mode). In the ball screw 20, a high reaction force in the second direction accompanying high-load driving acts on the nut 22 via the ball screw 20. In this first mode, a force in the second direction based on a high load is transmitted in the order of the nut 22, the sliding member 50, the inner ring 41, the rolling elements 43, the outer ring 42, and the housing 30. That is, an axial load from the ball screw 20 is received on the axial surface 311 of the housing 30 via the sliding member 50, the inner ring 41, the rolling elements 43, and the outer ring 42. In the bearing 40, the inner ring 41 is rotated relative to the outer ring 42 while bearing a radial load and an axial load. In such a ball screw device 11, even when a high axial load acts, rotational motion of the second assembly 70 (such as the nut 22) relative to the first assembly 60 (such as the housing 30) is stably supported. The ball screw device 11 according to the present embodiment is preferably applied to high-load specifications and is advantageous for downsizing.

In the first mode, the sliding member 50 and the inner ring 41 receive a strong force toward the second direction based on an axial load (reaction force). This force acts in a direction in which the first surface 501 of the sliding member 50 is separated from the axial surface 312 of the housing 30 in the axial direction. In an example, the ball screw device 11 is designed such that a substantial clearance 900 is generated between the axial surface 312 of the housing 30 and the first surface 501 of the sliding member 50 when a high load in the second direction is received. A design value of the clearance 900 in the first mode (high-load mode) is defined as an "allowable axial clearance (C1)". In another example, the ball screw device 11 is designed such that the clearance 900 (allowable axial clearance C1) between the axial surface 312 of the housing 30 and the first surface 501 of the sliding member 50 becomes substantially zero when a high load in the second direction is received.

In response to rotation of the second assembly 70 relative to the first assembly 60, relative movement (relative rotation) in the circumferential direction occurs between the axial surface 312 of the housing 30 and the first surface 501 of the sliding member 50. In the ball screw device 11, when the allowable axial clearance C1 greater than zero is set, a rotational load (frictional load) by contact between the housing 30 and the sliding member 50 in the first mode is avoided.

Here, in the ball screw device 11, when a load received in the second direction from the ball screw 20 is relatively small or substantially zero (no load), axial relative movement tends to occur between the inner ring 41 and the outer ring 42 (second mode, low-load mode). As described above, in the first mode, the substantial clearance 900 may be generated between the axial surface 312 of the housing 30 and the first surface 501 of the sliding member 50. In addition, in a low-load or no-load state, for example, in an initial state, in a case where the ball screw 20 is operated in a predetermined orientation, or the like, the substantial clearance 900 may be generated. When the substantial clearance 900 is present, the inner ring 41 may move in a direction in which it is separated from the outer ring 42 (first direction). This is due to, for example, the fact that the bearing 40 has a structure in which separation in the axial direction is likely to occur, and/or that an axial component force is generated in the bearing 40 to which a radial load is applied.

In the present embodiment, based on an axial positional relationship between the axial surface 312 (second axial surface AX2) of the housing 30 and the first surface 501 (third axial surface AX3) of the sliding member 50, axial relative movement of the inner ring 41 in the first direction is restricted. That is, axial relative movement of the inner ring 41 is restricted within a range of the design value of the clearance 900 (allowable axial clearance C1) between the axial surface 312 (second axial surface AX2) and the first surface 501 (third axial surface AX3).

In the present embodiment, contact between the axial surface 312 of the housing 30 and the first surface 501 of the sliding member 50 is allowed. By contact of the first surface 501 with the axial surface 312, axial relative movement of the inner ring 41 in the first direction is restricted. A range of a region (sliding region, contact region, facing region) 910 in which the axial surface 312 and the first surface 501 can come into contact with each other is suitably set in advance. In an example, the radial range of the sliding region 910 is set so as to include a position (region 910A) radially inward of the outer surface (outer circumferential surface) 412 of the inner ring 41. That is, contact between the housing 30 and the sliding member 50 at a position radially inward of the outer surface 412 of the inner ring 41 is allowed. In another example, the radial range of the sliding region 910 may be set to a range different from that described above. Appropriate setting of the sliding region 910 contributes to stable operation of the bearing 40 and is advantageous for reduction of rotational load and extension of the life of the bearing 40.

In the present embodiment, sliding between the axial surface 312 of the housing 30 and the first surface 501 of the sliding member 50 is allowed. In the ball screw device 11, when the first surface 501 abuts axial surface 312 during a rotation operation, relative movement in the circumferential direction (circumferential sliding) accompanied by contact occurs between the axial surface 312 and the first surface 501. That is, sliding (contact sliding) occurs in at least a part of the sliding region 910. In the ball screw device 11, axial relative movement of the inner ring 41 in the first direction is restricted even during a rotation operation by a configuration allowing contact sliding.

In the present embodiment, it is possible to employ a configuration in which a state of sliding changes in accordance with the magnitude of a load from the ball screw 20 in the second direction. In an example in which the value of the allowable axial clearance C1 is designed to be greater than zero, contact sliding between the axial surface 312 and the first surface 501 does not occur in the first mode (high-load mode). This is because the inner ring 41 is pressed in the second direction due to a high axial load from the ball screw 20, and the first surface does not come into contact with the axial surface 312 (non-contact sliding) due to the presence of the clearance 900. On the other hand, in the second mode (low-load mode), an axial load from the ball screw 20 in the second direction is relatively small or zero. Therefore, a position of the inner ring 41 relative to the outer ring 42 (relative position in the axial direction) tends to move in the first direction. When the first surface 501 abuts axial surface 312 during a rotation operation, contact sliding occurs between the axial surface 312 and the first surface 501. In this example, the state of sliding changes between a non-contact state in the first mode and a contact state in the second mode. A rotational load generated in the sliding region 910 is suppressed so as to be relatively small.

In another example, the value of the allowable axial clearance C1 is designed to be substantially zero. In the first mode (high-load mode), contact sliding occurs between the axial surface 312 and the first surface 501. For example, a rotational load (frictional load) based on a preload is generated in the sliding region 910. In addition, in the second mode (low-load mode) as well, contact sliding occurs between the axial surface 312 and the first surface 501. In this example, a rotational load in the sliding region 910 may change between the first mode and the second mode. In this example, change in relative positions of the inner ring 41 and the outer ring 42 in the axial direction between the first mode and the second mode is small, and a posture of the bearing 40 is maintained relatively constant.

In the present embodiment, contact sliding occurs between the first surface 501 of the sliding member 50 and the axial surface 312 of the housing 30. Since a member that comes into contact with the housing 30 is a member different from the inner ring 41, a degree of freedom in design of the sliding member 50 is high with respect to the material, surface accuracy, surface roughness, surface shape, and the like. By appropriately designing a sliding structure, it is possible to achieve reduction of wear, improvement of assemblability, improvement of positioning accuracy, and the like. This is advantageous for improving device life.

As described above, according to the present embodiment, based on a configuration or the like that restricts axial relative movement of the bearing 40, high reliability and long life are achieved while a compact configuration and a high-load specification are attained. In the present embodiment and modification examples thereof, as will be described below, a configuration in which the nut 22 of the ball screw 20 and the inner ring of the bearing 40 are integrally formed can be adopted, and/or a configuration in which an angular ball bearing is applied instead of a tapered roller bearing as the bearing 40 can be adopted.

### (Second embodiment)

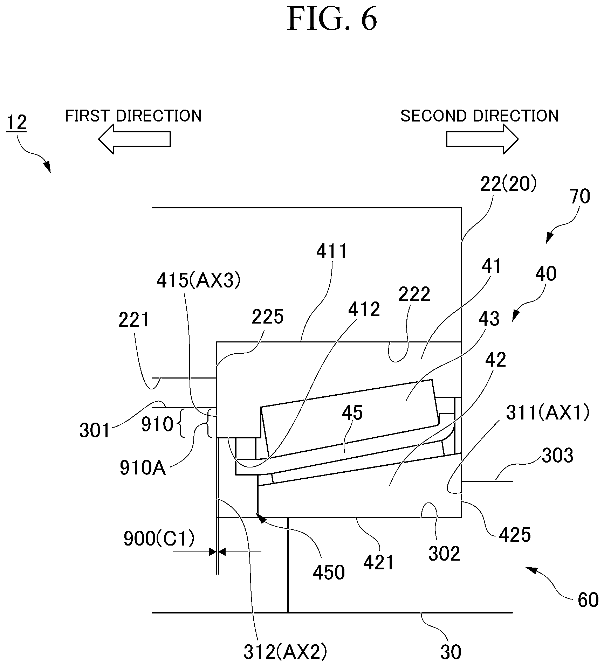

FIG. 6 is a schematic partial cross-sectional view showing a ball screw device 12 according to a second embodiment. In the following description of the second embodiment, the same reference signs are applied to configurations similar to those of the first embodiment, and description thereof is omitted or simplified. In the present embodiment, unlike the first embodiment, no sliding member is provided between the housing 30 and the inner ring 41. In addition, in the present embodiment, the first assembly (outer assembly, support body) 60 includes the housing 30, the outer ring 42, and the like. The second assembly (inner assembly, rotating body) 70 includes the nut 22, the inner ring 41, and the like.

In the present embodiment, the axial end surface 415 of the inner ring 41 is designed such that it directly abuts the axial surface 225 of the nut 22. In addition, the axial surface 312 (second axial surface AX2) of the housing 30 and the axial end surface 415 (third axial surface AX3) of the inner ring 41 are disposed so as to face each other. The axial end surface 415 is an axial surface that is formed integrally with a main body of the inner ring 41, and faces in the first direction. The axial surface 312 of the housing 30 is an axial surface that is formed integrally with the main body of the housing 30, and faces in the second direction. The axial end surface 415 and the axial surface 312 face and abut each other or face each other with a clearance therebetween.

In the present embodiment, during high-load driving, a force in the second direction based on a high load is transmitted in the order of the nut 22, the inner ring 41, the rolling elements 43, the outer ring 42, and the housing 30 (first mode, high-load mode). That is, an axial load from the ball screw 20 is received on the axial surface 311 of the housing 30 via the inner ring 41, the rolling elements 43, and the outer ring 42. In the bearing 40, the inner ring 41 is rotated relative to the outer ring 42 while bearing a radial load and an axial load. In the ball screw device 12, even when a high axial load acts, rotational motion of the second assembly 70 (such as the nut 22) relative to the first assembly 60 (such as the housing 30) is stably supported. The ball screw device 12 according to the present embodiment is preferably applied to high-load specifications and is advantageous for downsizing.

In the first mode, the inner ring 41 receives a strong force toward the second direction based on an axial load (reaction force). This force acts in a direction in which the axial end surface 415 of the inner ring 41 is separated from the axial surface 312 of the housing 30 in the axial direction. In an example, the ball screw device 12 is designed such that the substantial clearance 900 is generated between the axial surface 312 of the housing 30 and the axial end surface 415 of the inner ring 41 when a high load in the second direction is received. That is, the allowable axial clearance C1 is set to be greater than zero. In another example, the ball screw device 12 is designed such that the clearance 900 (allowable axial clearance C1) between the axial surface 312 of the housing 30 and the axial end surface 415 of the inner ring 41 becomes substantially zero when a high load in the second direction is received.

In response to rotation of the second assembly 70 relative to the first assembly 60, relative movement (relative rotation) in the circumferential direction occurs between the axial surface 312 of the housing 30 and the axial end surface 415 of the inner ring 41. In the ball screw device 12, when the allowable axial clearance C1 greater than zero is set, a rotational load (frictional load) by contact between the housing 30 and the inner ring 41 in the first mode is avoided.

In the present embodiment, based on an axial positional relationship between the axial surface 312 (second axial surface AX2) of the housing 30 and the axial end surface 415 (third axial surface AX3) of the inner ring 41, axial relative movement of the inner ring 41 in the first direction is restricted. That is, axial relative movement of the inner ring 41 is restricted within the range of the design value of the clearance 900 (allowable axial clearance C1) between the axial surface 312 and the axial end surface 415. By contact of the axial end surface 415 with the axial surface 312 in the sliding region 910, axial relative movement of the inner ring 41 in the first direction is restricted. In addition, in the present embodiment, sliding between the axial surface 312 of the housing 30 and the axial end surface 415 of the inner ring 41 is allowed. In the ball screw device 12, axial relative movement of the inner ring 41 in the first direction is restricted even during a rotation operation by a configuration allowing contact sliding.

In the present embodiment, contact sliding occurs between the axial end surface 415 of the inner ring 41 and the axial surface 312 of the housing 30. Compared to the first embodiment, the number of components of the ball screw device 12 can be reduced, which is advantageous for cost reduction. In the present embodiment and modification examples thereof, as will be described below, a configuration in which the nut 22 of the ball screw 20 and the inner ring of the bearing 40 are integrally formed can be adopted, and/or a configuration in which an angular ball bearing is applied instead of a tapered roller bearing as the bearing 40 can be adopted.

### (Third embodiment)

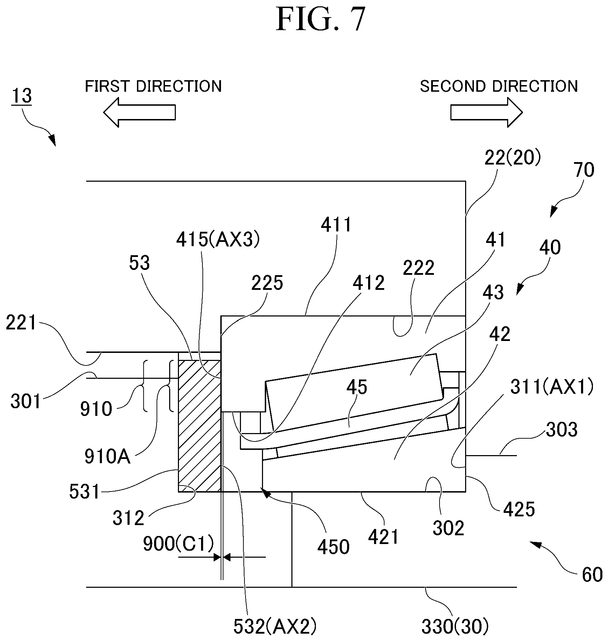

FIG. 7 is a schematic partial cross-sectional view showing a ball screw device 13 according to a third embodiment. In the following description of the third embodiment, the same reference signs are applied to configurations similar to those of the first embodiment, and description thereof is omitted or simplified. In the present embodiment, unlike the first embodiment, the housing 30 includes a sliding member 53. The sliding member 53 is provided as a separate member from the main body of the housing 30 (housing main body 330). In addition, in the present embodiment, the first assembly (outer assembly, support body) 60 includes the housing 30, the outer ring 42, and the like. The housing 30 has the housing main body 330 and the sliding member 53. The second assembly 70 (inner assembly, rotating body) includes the nut 22, the inner ring 41, and the like.

In the present embodiment, the sliding member 53 has a ring shape, and has a first surface 531 facing in the first direction and a second surface 532 facing in the second direction. In a state where the first surface 531 faces and abuts the axial surface 312 of the housing 30, the sliding member 53 is fixed to the housing main body 330. In FIG. 7, the second surface 532 (second axial surface AX2) of the sliding member 53 and the axial end surface 415 (third axial surface AX3) of the inner ring 41 are disposed so as to face each other. The second surface 532 and the axial end surface 415 face and abut each other or face each other with a clearance therebetween. Additionally and/or alternatively, various structures including another member (not shown) (thrust collar, C-shaped retaining ring, annular plate, or the like) for fixing the sliding member 53 to the housing main body 330 can be applied. In an example, a member having a form similar to that of a so-called sliding bearing is used as the sliding member 53. In another example, a member having a relatively simple form such as a spacer is used as the sliding member 53.

In the present embodiment, during high-load driving, similarly to the second embodiment, a force in the second direction based on a high load is transmitted in the order of the nut 22, the inner ring 41, the rolling elements 43, the outer ring 42, and the housing 30 (first mode, high-load mode). In the ball screw device 13, even when a high axial load acts, rotational motion of the second assembly 70 (such as the nut 22) relative to the first assembly 60 (such as the housing 30) is stably supported.

In the first mode, the inner ring 41 receives a strong force toward the second direction based on an axial load (reaction force). This force acts in an orientation in which the axial end surface 415 of the inner ring 41 is separated from the axial surface 312 of the housing 30 (second surface 532 of the sliding member 53) in the axial direction. In an example, the ball screw device 13 is designed such that the substantial clearance 900 is generated between the second surface 532 of the sliding member 53 and the axial end surface 415 of the inner ring 41 when a high load in the second direction is received. That is, the allowable axial clearance C1 is set to be greater than zero. In another example, the ball screw device 13 is designed such that the clearance 900 (allowable axial clearance C1) between the second surface 532 of the sliding member 53 and the axial end surface 415 of the inner ring 41 becomes substantially zero when a high load in the second direction is received.

In response to rotation of the second assembly 70 relative to the first assembly 60, relative movement (relative rotation) in the circumferential direction occurs between the second surface 532 of the sliding member 53 and the axial end surface 415 of the inner ring 41. In the ball screw device 13, when the allowable axial clearance C1 greater than zero is set, a rotational load (frictional load) by contact between the sliding member 53 and the inner ring 41 in the first mode is avoided.

In the present embodiment, based on an axial positional relationship between the second surface 532 (second axial surface AX2) of the sliding member 53 and the axial end surface 415 (third axial surface AX3) of the inner ring 41, axial relative movement of the inner ring 41 in the first direction is restricted. That is, axial relative movement of the inner ring 41 is restricted within the range of the design value of the clearance 900 (allowable axial clearance C1) between the second surface 532 and the axial end surface 415. By contact of the axial end surface 415 of the inner ring 41 with the sliding member 53 in the sliding region 910, axial relative movement of the inner ring 41 in the first direction is restricted. In addition, in the present embodiment, sliding between the second surface 532 of the sliding member 53 and the axial end surface 415 of the inner ring 41 is allowed. In the ball screw device 13, axial relative movement of the inner ring 41 in the first direction is restricted even during a rotation operation by a configuration allowing contact sliding.

In the present embodiment, contact sliding occurs between the second surface 532 of the sliding member 53 and the axial end surface 415 of the inner ring 41. Since the member that comes into contact with the inner ring 41 is a separate member from the housing main body 330, it is possible to achieve reduction of wear, improvement of assemblability, improvement of positioning accuracy, and the like by appropriately designing a sliding structure. This is advantageous for improving device life.

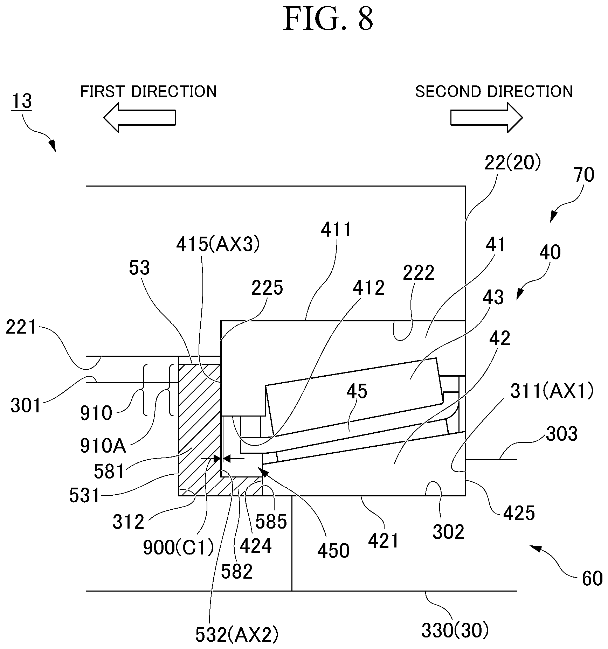

Alternatively, various shapes can be applied for the sliding member 53. In the modification example shown in FIG. 8, the sliding member 53 has a radial part 581 extending in the radial direction, and a circumferential part 582 extending from the radial part 581 in the second direction. An outer circumferential surface of the sliding member 53 has a diameter corresponding to the inner surface 302 of the housing 30. The sliding member 53 is inserted into the recessed portion 450 of the housing 30 such that the outer circumferential surface of the sliding member 53 and the inner surface 302 of the housing 30 face each other, and the sliding member 53 and the housing 30 are fitted together. In fitting between the sliding member 53 and the housing 30, a tightening allowance or a clearance (clearance fit) is suitably provided. The sliding member 53 and the outer ring 42 are disposed side by side in the axial direction. The sliding member 53 is disposed between the axial surface 312 of the housing 30 and an axial surface 424 of the outer ring 42. An axial end surface (first surface 531) of the sliding member 53 facing in the first direction can abut the axial surface 312 of the housing 30. An axial end surface (axial end surface 585 of the circumferential part 582) of the sliding member 53 facing in the second direction can abut the axial surface 424 of the outer ring 42. In an example, the sliding member 53 is sandwiched between the axial surface 312 and an axial end surface 424 with a preload. In another example, in a state where a preload is substantially absent, the sliding member 53 is disposed between the axial surface 312 and the axial surface 424. In the sliding member 53, the second surface 532 facing in the second direction is disposed between the first surface 531 and the axial end surface 585 in the axial direction. The second surface 532 is provided radially inward of the axial end surface 585 and has a surface perpendicular to the axial direction, for example. At least a part of the second surface 532 is disposed so as to face the axial surface 415 of the inner ring 41. At least a part of the second surface 532 and the axial surface 415 face and abut each other or face each other with a clearance therebetween. In the example of FIG. 8 as well, due to contact of the axial surface 415 of the inner ring 41 with the second surface 532 of the sliding member 53, axial relative movement of the inner ring 41 in the first direction is restricted. In the present embodiment and modification examples thereof, as will be described below, a configuration in which the nut 22 of the ball screw 20 and the inner ring of the bearing 40 are integrally formed can be adopted, and/or a configuration in which an angular ball bearing is applied instead of a tapered roller bearing as the bearing 40 can be adopted.

### (Fourth embodiment)

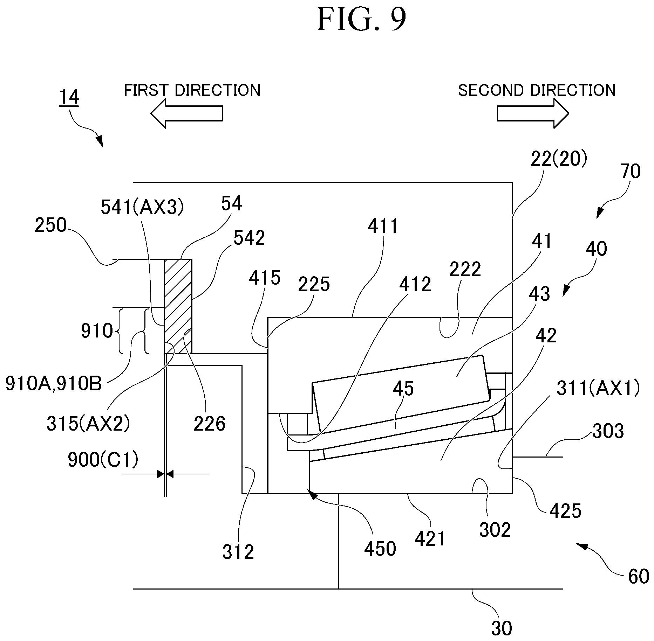

FIG. 9 is a schematic partial cross-sectional view showing a ball screw device 14 according to a fourth embodiment. In the following description of the fourth embodiment, the same reference signs are applied to configurations similar to those of the first embodiment, and description thereof is omitted or simplified. In the present embodiment, unlike the first embodiment, the ball screw 20 includes a sliding member 54. The sliding member 54 is provided as a separate member from a main body of the screw shaft 21/nut 22. In addition, in the present embodiment, the first assembly (outer assembly, support body) 60 includes the housing 30, the outer ring 42, and the like. The second assembly 70 (inner assembly, rotating body) includes the nut 22, the inner ring 41, the sliding member 54, and the like.

In the present embodiment, the housing 30 has an axial surface 315 facing in the second direction. The nut 22 has an axial surface 226 facing in the first direction. The axial surface 315 and the axial surface 226 are disposed so as to face each other. The sliding member 54 is disposed between the axial surface 315 and the axial surface 226. The sliding member 54 has a ring shape, and has a first surface 541 facing in the first direction and a second surface 542 facing in the second direction. The sliding member 54 is fixed to the nut 22 in a state where it faces and abuts the nut 22. The axial surface 315 (second axial surface AX2) of the housing 30 and the first surface 541 (third axial surface AX3) of the sliding member 54 are disposed so as to face each other. The axial surface 315 and the first surface 541 face and abut each other or face each other with a clearance therebetween. Additionally and/or alternatively, various structures including another member (not shown) (thrust collar, C-shaped retaining ring, annular plate, or the like) for fixing the sliding member 54 to the nut 22 can be applied. In an example, a member having a form similar to that of a sliding bearing is used as the sliding member 54. In another example, a member having a relatively simple form such as a spacer is used as the sliding member 54.

In the present embodiment, during high-load driving, similarly to the second embodiment, a force in the second direction based on a high load is transmitted in the order of the nut 22, the inner ring 41, the rolling elements 43, the outer ring 42, and the housing 30 (first mode, high-load mode). In the ball screw device 14, even when a high axial load acts, rotational motion of the second assembly 70 (such as the nut 22) relative to the first assembly 60 (such as the housing 30) is stably supported.

In the first mode, the nut 22 receives a strong force toward the second direction based on an axial load (reaction force). This force acts in a direction in which the axial surface 226 of the nut 22 (first surface 541 of the sliding member 54) is separated from the axial surface 315 of the housing 30 in the axial direction. In an example, the ball screw device 14 is designed such that the substantial clearance 900 is generated between the axial surface 315 of the housing 30 and the first surface 541 of the sliding member 54 when a high load in the second direction is received. That is, the allowable axial clearance C1 is set to be greater than zero. In another example, the ball screw device 14 is designed such that the clearance 900 (allowable axial clearance C1) between the axial surface 315 of the housing 30 and the first surface 541 of the sliding member 54 becomes substantially zero when a high load in the second direction is received.

In response to rotation of the second assembly 70 relative to the first assembly 60, relative movement (relative rotation) in the circumferential direction occurs between the axial surface 315 of the housing 30 and the first surface 541 of the sliding member 54. In the ball screw device 14, when the allowable axial clearance C1 greater than zero is set, a rotational load (frictional load) by contact between the housing 30 and the sliding member 54 in the first mode is avoided.

In the present embodiment, based on an axial positional relationship between the axial surface 315 of the housing 30 (second axial surface AX2) and the first surface 541 (third axial surface AX3) of the sliding member 54, axial relative movement of the inner ring 41 in the first direction is restricted. That is, axial relative movement of the inner ring 41 is restricted within the range of the design value of the clearance 900 (allowable axial clearance C1) between the axial surface 315 and the first surface 541. By contact of the first surface 541 of the sliding member 54 with the axial surface 315 of the housing 30 in the sliding region 910, axial relative movement of the inner ring 41 in the first direction is restricted. In addition, in the present embodiment, sliding between the axial surface 315 of the housing 30 and the first surface 541 of the sliding member 54 is allowed. In the ball screw device 14, axial relative movement of the inner ring 41 in the first direction is restricted even during a rotation operation by a configuration allowing contact sliding.

In the present embodiment, contact sliding occurs between the axial surface 315 of the housing 30 and the first surface 541 of the sliding member 54. Since the member that comes into contact with the housing 30 is a separate member from the nut 22, it is possible to achieve reduction of wear, improvement of assemblability, improvement of positioning accuracy, and the like by appropriately designing a sliding structure. This is advantageous for improving device life.

In addition, in the present embodiment, the radial range of the sliding region 910 is set so as to include a position (region 910A) radially inward of the outer surface (outer circumferential surface) 412 of the inner ring 41 and a position (region 910B) radially inward of the rolling elements 43. That is, contact between the housing 30 and the sliding member 54 at a position radially inward of the rolling elements 43 is allowed. Appropriate setting of the sliding region 910 contributes to stable operation of the bearing 40 and is advantageous for reduction of rotational load and extension of the life of the bearing 40.

In the example shown in FIG. 9, the radial range of the sliding region 910 is set at a position radially inward of the rolling elements 43. Alternatively, at least a part of the radial range of the sliding region 910 may be set at a position radially outward of the rolling elements 43. In addition, at least a part of the radial range of the sliding region 910 may be set at a position radially outward of the outer surface (outer circumferential surface) 412 of the inner ring 41.

In addition, in the example shown in FIG. 9, the sliding member 54 is provided in the ball screw 20. In a modification example of the form of FIG. 9, a configuration in which a sliding member is provided in the housing 30 at a position away from the bearing 40 in the axial direction can be applied. That is, a sliding member fixed to the housing 30 may be disposed between the axial surface of the housing 30 and the axial surface of the ball screw 20. In this modification example, based on an axial positional relationship between the axial surface (second axial surface AX2) of the sliding member provided in the housing 30 and the axial surface (third axial surface AX3) of the nut 22, axial relative movement of the nut 22 and the inner ring 41 in the first direction is restricted. Moreover, in another modification example, as in the second embodiment, a sliding structure may have a configuration including no sliding member. In this configuration, the axial surface of the nut 22 and the axial surface of the housing 30 are configured such that they directly face each other at a position away from the bearing 40 in the axial direction and contact sliding occurs between the axial surface of the nut 22 and the axial surface of the housing 30. In the present embodiment and modification examples thereof, as will be described below, a configuration in which the nut 22 of the ball screw 20 and the inner ring of the bearing 40 are integrally formed can be adopted, and/or a configuration in which an angular ball bearing is applied instead of a tapered roller bearing as the bearing 40 can be adopted.

### (Fifth, sixth, and seventh embodiments)

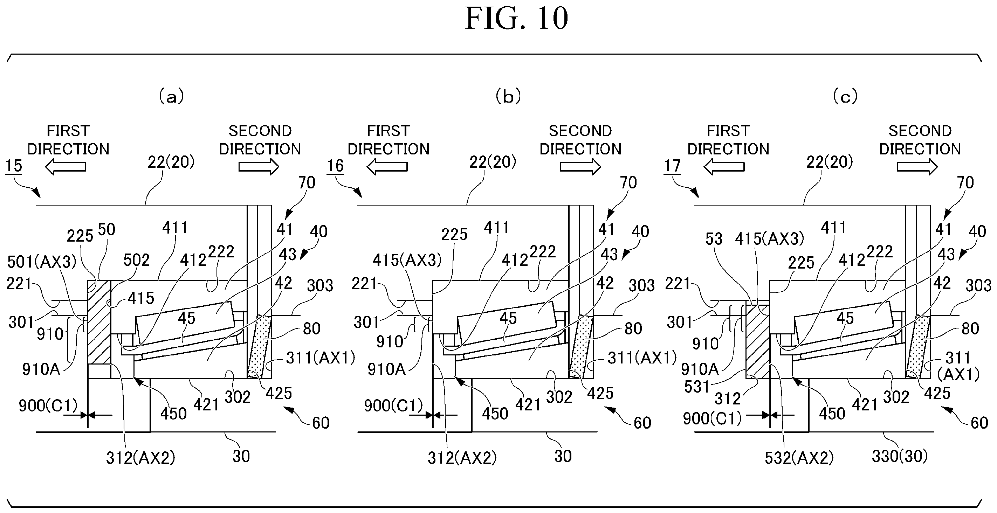

FIG. 10 is a schematic cross-sectional view showing ball screw devices 15, 16, and 17 according to fifth, sixth, and seventh embodiments. FIG. 10(a) shows the ball screw device 15 according to the fifth embodiment, which is a modification example of the first embodiment. FIG. 10(b) shows the ball screw device 16 according to the sixth embodiment, which is a modification example of the second embodiment. FIG. 10(c) shows the ball screw device 17 according to the seventh embodiment, which is a modification example of the third embodiment. In the following description, the same reference signs are applied to configurations similar to those of the foregoing embodiments, and description thereof is omitted or simplified. In the respective embodiments, the ball screw devices 15, 16, and 17 further include a preload member 80.

In the fifth embodiment shown in FIG. 10(a), the ball screw device 15 is configured such that the axial surface 312 (second axial surface AX2) of the housing 30 and the first surface 501 (third axial surface AX3) of the sliding member 50 approach each other by a preload of the preload member 80. In an example, the preload member 80 is an elastic member, and for example, a disc spring is applied. For example, the preload member 80 is disposed between the axial end surface 425 of the outer ring 42 and the axial surface 311 of the housing 30 in a state of being elastically deformed in advance. The preload member 80 applies a biasing force (preload) in the first direction relative to the outer ring 42 based on elastic deformation. In addition, the shape (elastic deformation state) of the preload member 80 changes in accordance with the load in the second direction acting on the bearing 40. In another example, a preload mechanism other than the above may be applied.

In the present embodiment, in both a high-load state (first mode) and a low-load state (second mode), a preload by the preload member 80 acts on the bearing 40. In addition, in the second mode, based on the preload by the preload member 80, the axial surface 312 (second axial surface AX2) of the housing 30 and the first surface 501 (third axial surface AX3) of the sliding member 50 come into contact with each other. The same applies to the sixth embodiment shown in FIG. 10(b) and the seventh embodiment shown in FIG. 10(c). In addition, similarly in the fourth embodiment as well, a configuration further including the preload member 80 can be applied.

In each of the fifth, sixth, and seventh embodiments, movement of the bearing 40 in the axial direction relative to the clearance 900 is suppressed due to the preload by the preload member 80. As a result, for example, noise and vibration are reduced or the like, whereby defects such as damage to the bearing 40 and abnormal noise are reliably prevented. In each of the fifth, sixth, and seventh embodiments and modification examples thereof, as will be described below, a configuration in which the nut 22 of the ball screw 20 and the inner ring of the bearing 40 are integrally formed can be adopted, and/or a configuration in which an angular ball bearing is applied instead of a tapered roller bearing as the bearing 40 can be adopted.

### (Eighth, ninth, and tenth embodiments)

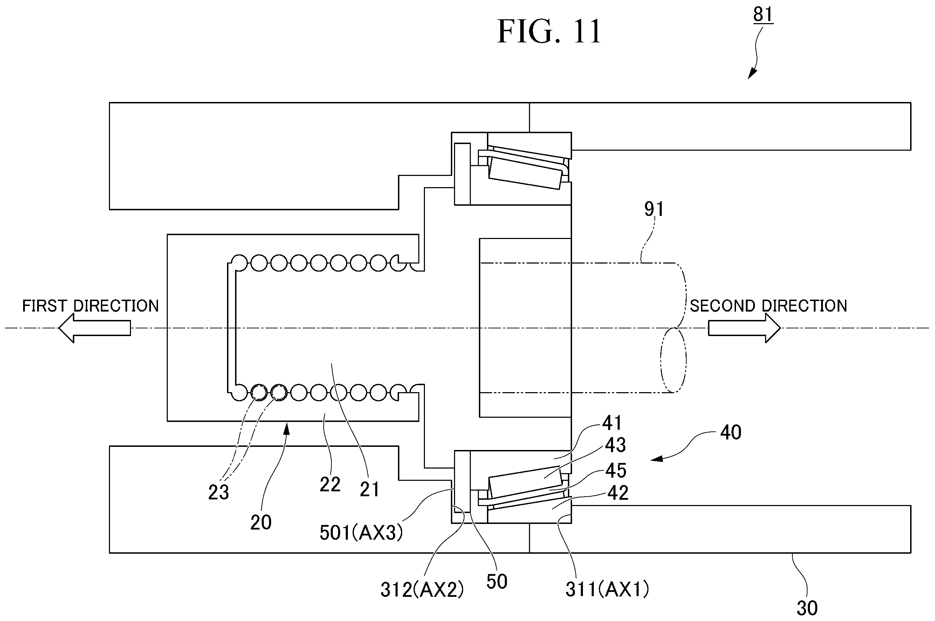

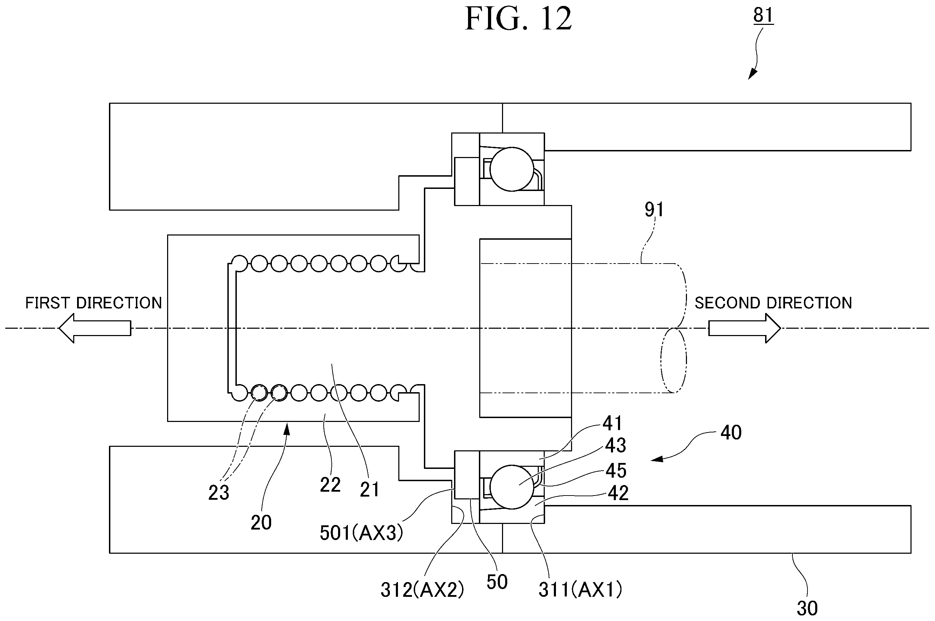

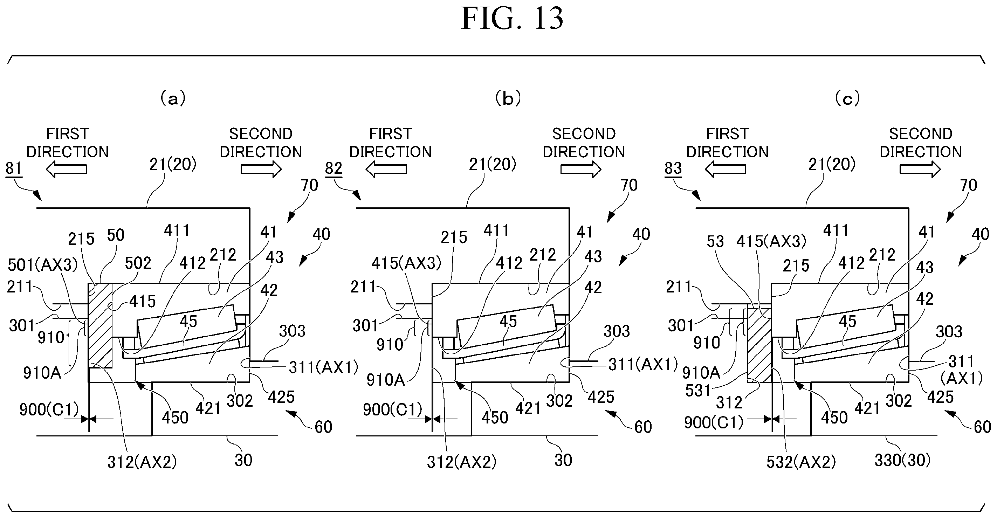

FIGS. 11, 12, and 13 are schematic cross-sectional views showing ball screw devices 81, 82, and 83 according to eighth, ninth, and tenth embodiments. FIGS. 11, 12, and 13(a) show the ball screw device 81 according to the eighth embodiment, which is a modification example of the first embodiment. FIG. 13(b) shows the ball screw device 82 according to the ninth embodiment, which is a modification example of the second embodiment. FIG. 13(c) shows the ball screw device 83 according to the tenth embodiment, which is a modification example of the third embodiment. In the following description, the same reference signs are applied to configurations similar to those of the foregoing embodiments, and description thereof is omitted or simplified. In the example shown in FIG. 11, the bearing 40 is a single-row tapered roller bearing, and rollers (tapered rollers) are used as the rolling elements 43. In another example shown in FIG. 12, the bearing 40 is a single-row angular ball bearing, and balls are used as the rolling elements 43. In the following description, an example in which a tapered roller bearing is applied as the bearing 40 is shown (FIGS. 13 to 14). An angular ball bearing can also be similarly applied as the bearing 40. In the respective embodiments, the ball screw devices 81, 82, and 83 are configured such that the screw shaft 21 of the ball screw 20 relatively rotates with respect to the housing 30.

As shown in FIGS. 11 and 12, in the eighth embodiment, the first shaft 91, to which a drive force of a motor (not shown) is transmitted, is connected to the screw shaft 21. Alternatively, a drive force is transmitted to the screw shaft 21 via a speed reduction mechanism, which is disposed at a preferable position, using gears (including planetary gears and the like), pulleys, or the like. In the ball screw 20, rotational motion is converted into linear motion.

In the present embodiment, the inner ring 41 of the bearing 40 is attached to the screw shaft 21 of the ball screw 20, and the outer ring 42 of the bearing 40 is attached to the housing 30. Additionally and/or alternatively, various structures including another member (not shown) (thrust collar, C-shaped retaining ring, annular plate, or the like) for supporting a position of the inner ring 41 relative to the screw shaft 21 in the axial direction can be applied.

As shown in FIG. 13(a), the outer diameter of the bearing 40 is larger than an outer diameter of the screw shaft 21. In another example, the outer diameter of the bearing 40 can be smaller than the outer diameter of the screw shaft 21. In FIG. 13(a), the bearing 40 is disposed substantially radially outward of the screw shaft 21. The screw shaft 21 has outer surfaces 211 and 212 facing radially outward. The outer surface (outer circumferential surface) 212 of the screw shaft 21 has an outer diameter corresponding to the diameter of the hole of the bearing 40 (inner diameter of the inner ring 41). A part of the screw shaft 21 is inserted into the hole of the bearing 40 such that the outer surface 212 of the screw shaft 21 and the inner surface (inner circumferential surface) 411 of the inner ring 41 face each other, whereby the screw shaft 21 and the bearing 40 (inner ring 41) are fitted together. The inner surface 411 of the bearing 40 (inner ring 41) is supported by the outer surface 212 of the screw shaft 21. In fitting between the screw shaft 21 and the inner ring 41, a tightening allowance or a clearance (clearance fit) is suitably provided. In another example, a configuration in which the screw shaft 21 and the inner ring 41 are integrally formed can be applied.

In the present embodiment, the screw shaft 21 has an axial surface (axial wall surface) 215 facing in the second direction. The axial surface 215 is provided between the outer surface 211 and the outer surface 212 in the radial direction, and has a surface perpendicular to the axial direction, for example. The axial surface 215 of the screw shaft 21 is disposed so as to face the axial end surface 415 of the inner ring 41.

In the present embodiment, the sliding member 50 is disposed between the axial surface 215 of the screw shaft 21 and the axial end surface 415 of the inner ring 41. The sliding member 50 is fixed to the screw shaft 21 and the inner ring 41 by being sandwiched between the screw shaft 21 and the inner ring 41. In the present embodiment, the first assembly (outer assembly, support body) 60 includes the housing 30, the outer ring 42, and the like. The second assembly (inner assembly, rotating body) 70 includes the screw shaft 21, the inner ring 41, the sliding member 50, and the like.

In the present embodiment, a high reaction force in the second direction accompanying high-load driving acts on the screw shaft 21 via the ball screw 20. In this first mode, a force in the second direction based on a high load is transmitted in the order of the screw shaft 21, the sliding member 50, the inner ring 41, the rolling elements 43, the outer ring 42, and the housing 30. In the ball screw device 11, even when a high axial load acts, rotational motion of the second assembly 70 (such as the screw shaft 21) relative to the first assembly 60 (such as the housing 30) is stably supported.

In the present embodiment, similarly to the first embodiment, based on an axial positional relationship between the axial surface 312 (second axial surface AX2) of the housing 30 and the first surface 501 (third axial surface AX3) of the sliding member 50, axial relative movement of the inner ring 41 in the first direction is restricted. That is, axial relative movement of the inner ring 41 is restricted within the range of the design value of the clearance 900 (allowable axial clearance C1) between the axial surface 312 (second axial surface AX2) and the first surface 501 (third axial surface AX3). Due to contact of the first surface 501 of the sliding member 50 with the axial surface 312 of the housing 30, axial relative movement of the inner ring 41 in the first direction is restricted. In addition, by contact sliding in the sliding region 910, axial relative movement of the inner ring 41 in the first direction is restricted even during a rotation operation.

In this manner, in the present embodiment, even in a configuration in which the screw shaft 21 rotates with respect to the housing 30, similarly to the first embodiment, based on a configuration or the like that restricts axial relative movement of the bearing 40, high reliability and long life are achieved while a compact configuration and a high-load specification are attained. The same applies to the ninth embodiment shown in FIG. 13(b) and the tenth embodiment shown in FIG. 13(c). In each of the eighth, ninth, and tenth embodiments and modification examples thereof, as will be described below, a configuration in which the screw shaft 21 of the ball screw 20 and the inner ring of the bearing 40 are integrally formed can be adopted, and/or a configuration in which an angular ball bearing is applied instead of a tapered roller bearing as the bearing 40 can be adopted.

### (Eleventh, twelfth, and thirteenth embodiments)

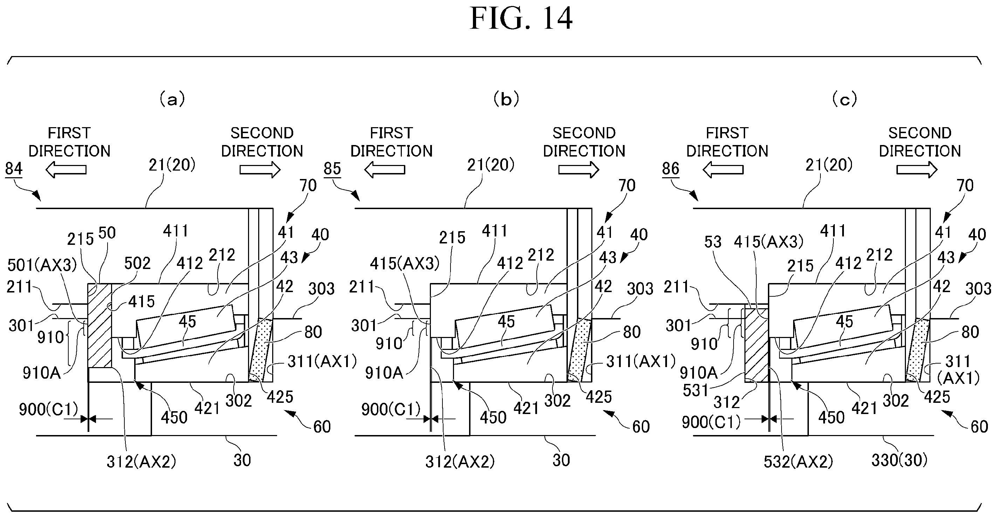

FIG. 14 is a schematic partial cross-sectional view showing ball screw devices 84, 85, and 86 according to eleventh, twelfth, and thirteenth embodiments. FIG. 14(a) shows the ball screw device 84 according to the eleventh embodiment, which is a modification example of the eighth embodiment. FIG. 14(b) shows the ball screw device 85 according to the twelfth embodiment, which is a modification example of the ninth embodiment. FIG. 14(c) shows the ball screw device 86 according to the thirteenth embodiment, which is a modification example of the tenth embodiment. In the following description, the same reference signs are applied to configurations similar to those of the foregoing embodiments, and description thereof is omitted or simplified. In the respective embodiments, the ball screw devices 84, 85, and 86 further include the preload member 80.

In the eleventh embodiment shown in FIG. 14(a), the ball screw device 84 is configured such that the axial surface 312 (second axial surface AX2) of the housing 30 and the first surface 501 (third axial surface AX3) of the sliding member 50 approach each other by a preload of the preload member 80. In the present embodiment, in both a high-load state (first mode) and a low-load state (second mode), a preload by the preload member 80 acts on the bearing 40. In addition, in the second mode, based on the preload of the preload member 80, the axial surface 312 (second axial surface AX2) of the housing 30 and the first surface 501 (third axial surface AX3) of the sliding member 50 come into contact with each other. The same applies to the twelfth embodiment shown in FIG. 14(b) and the thirteenth embodiment shown in FIG. 14(c).

In each of the eleventh, twelfth, and thirteenth embodiments, movement of the bearing 40 in the axial direction relative to the clearance 900 is suppressed due to the preload by the preload member 80. As a result, for example, noise and vibration are reduced or the like, whereby defects such as damage to the bearing 40 and abnormal noise are reliably prevented. In each of the eleventh, twelfth, and thirteenth embodiments and modification examples thereof, as will be described below, a configuration in which the screw shaft 21 of the ball screw 20 and the inner ring of the bearing 40 are integrally formed can be adopted, and/or a configuration in which an angular ball bearing is applied instead of a tapered roller bearing as the bearing 40 can be adopted.

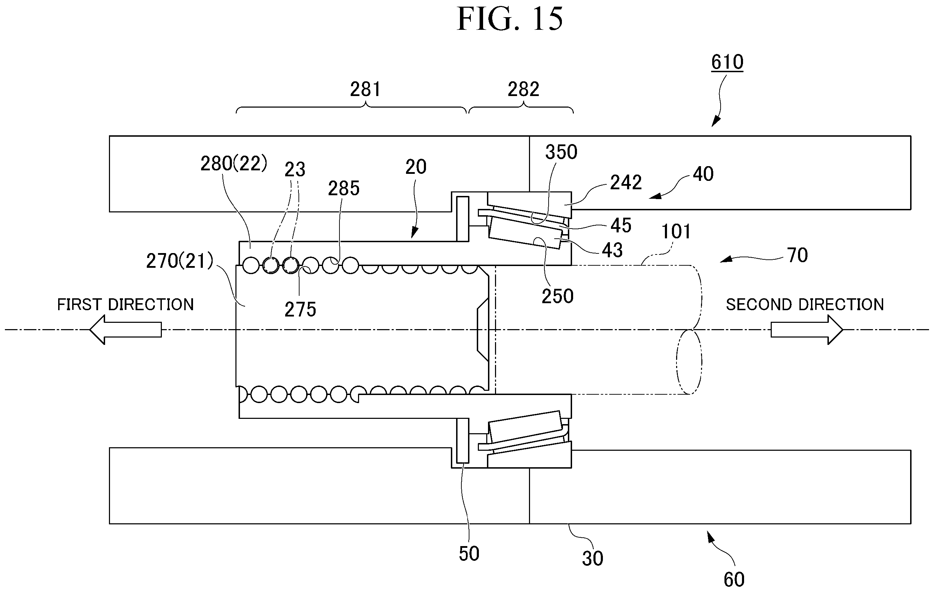

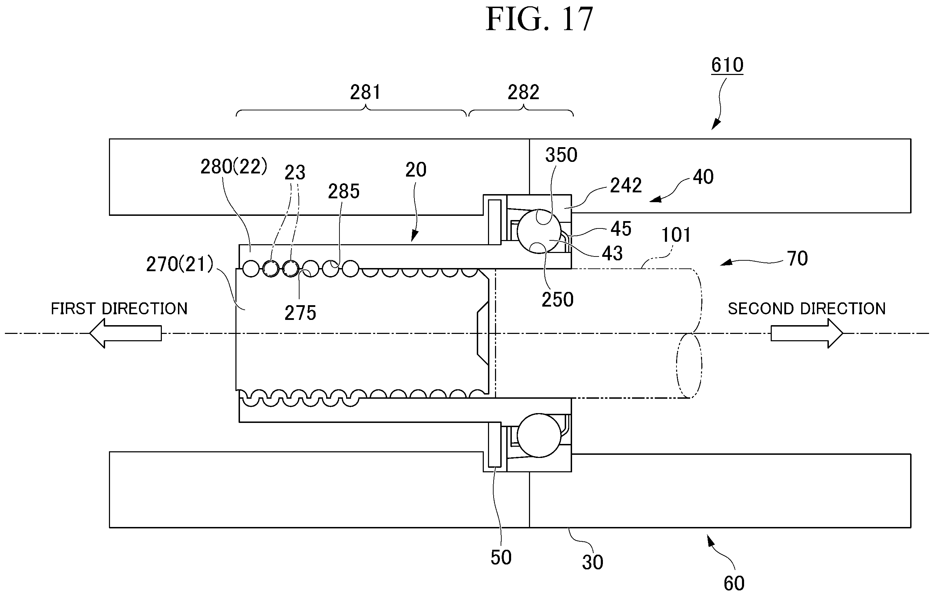

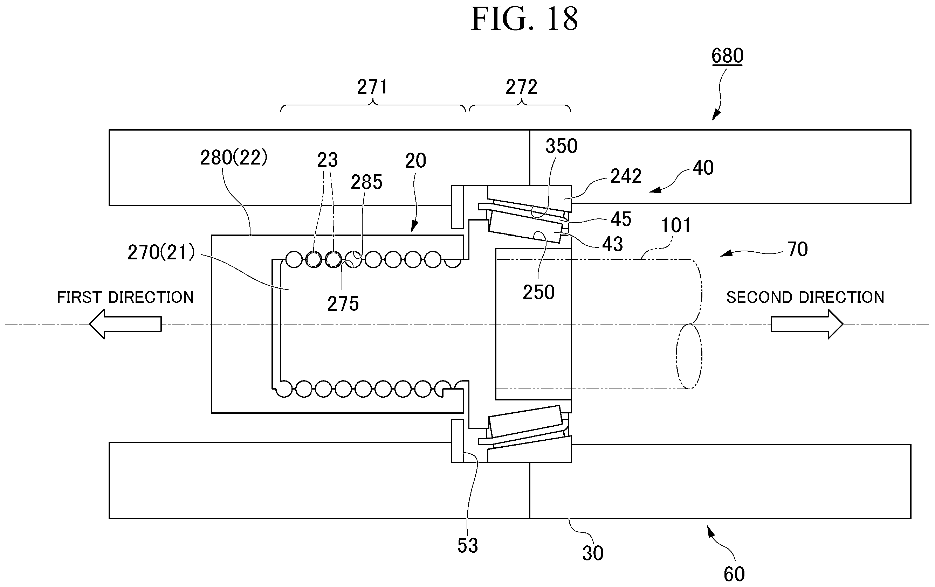

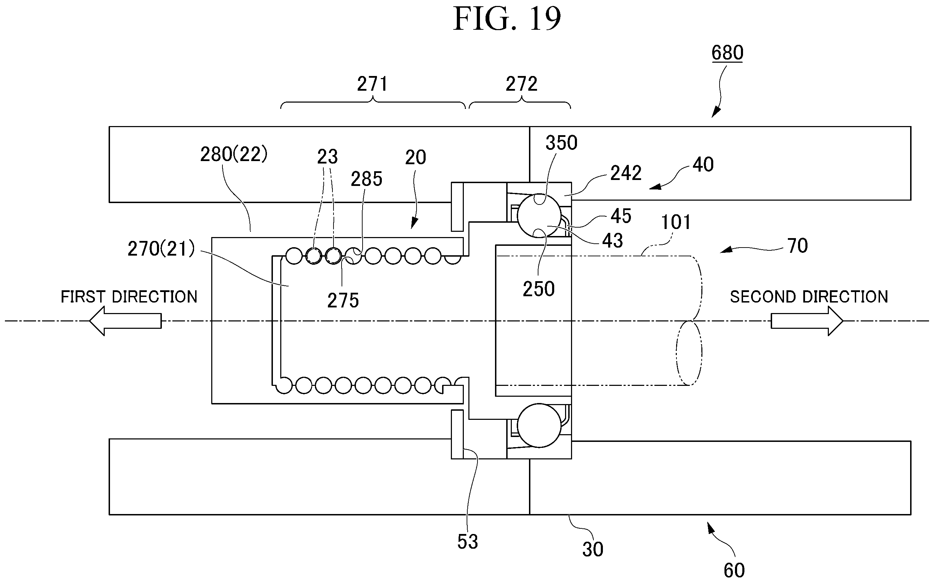

Next, a configuration in which the inner ring 41 of the bearing 40 is integrated with the nut 22 of the ball screw 20 (FIGS. 15 and 17), and a configuration in which the inner ring 41 of the bearing 40 is integrated with the screw shaft 21 of the ball screw 20 (FIGS. 18 and 19) will be described. In the following description, the same reference signs are applied to configurations similar to those of the foregoing embodiments, and description thereof is omitted or simplified.

### (Fourteenth embodiment)

FIG. 15 is a schematic cross-sectional view showing a ball screw device 610 according to a fourteenth embodiment, as a modification example of the first embodiment (FIG. 1). In the present embodiment, the inner ring of the bearing 40 is formed integrally with the nut 22 of the ball screw 20. In the ball screw device 610, for example, a first shaft 101, to which a drive force of a motor (not shown) is transmitted, is connected to the nut 22. In the ball screw 20, a plurality of balls 23 are disposed in a space (rolling path) formed based on opposing disposition of a screw groove 275 of the screw shaft 21 and a screw groove 285 of the nut 22.

In the present embodiment, the ball screw 20 has an inner ring raceway surface 250 provided in the nut 22. The support body 60 has an outer ring raceway surface 350 corresponding to the inner ring raceway surface 250. A plurality of tapered rollers 43 serving as rolling elements are disposed between the inner ring raceway surface 250 and the outer ring raceway surface 350. The tapered rollers 43 have a truncated cone shape. The tapered roller bearing 40 is configured to include the inner ring raceway surface 250, the outer ring raceway surface 350, and the tapered rollers 43. The plurality of tapered rollers 43 are held between the inner ring raceway surface 250 and the outer ring raceway surface 350 via a cage. The tapered roller bearing 40 can additionally have a seal structure for enclosing a lubricant. The ball screw 20 is supported by the support body 60 via the tapered roller bearing 40.

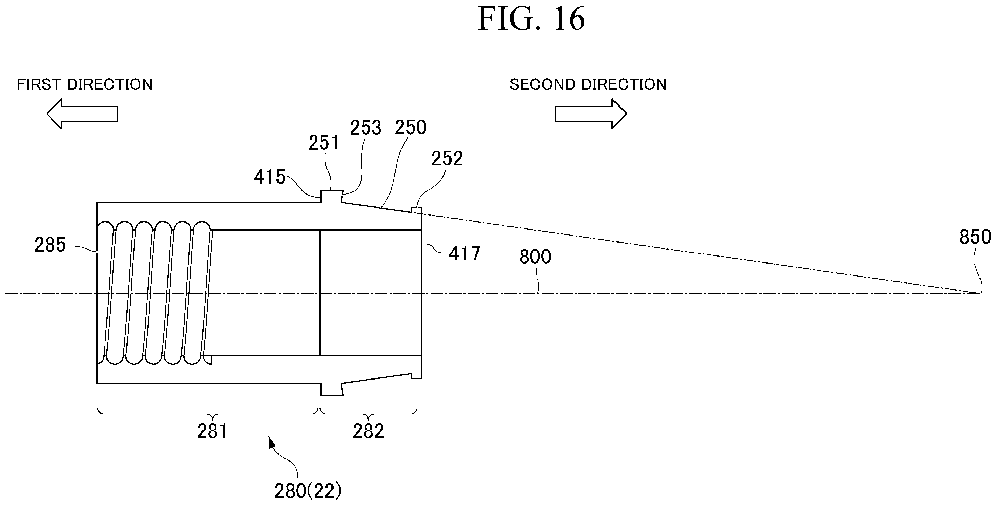

FIG. 16 is a cross-sectional view showing an example of the nut 22. A nut main body 280 has a first part 281 provided with the screw groove 285, and a second part 282 provided with the inner ring raceway surface 250. Both the screw groove 285 and the inner ring raceway surface 250 are formed in the nut main body 280. The nut 22 has the nut main body 280 in which the screw groove 285 and the inner ring raceway surface 250 are integrally provided. The screw groove 285 and the inner ring raceway surface 250 are formed in a material of the nut main body 280. In an example, the first part 281 and the second part 282 are disposed side by side in the axial direction. In another example, at least a part of the second part 282 is disposed so as to overlap the first part 281 in the axial direction. For example, the entirety of the inner ring raceway surface 250 or at least a part of the inner ring raceway surface 250 may be installed at the same position as the screw groove 285 in the axial direction. In addition, the entirety of the inner ring raceway surface 250 or at least a part of the inner ring raceway surface 250 may be disposed radially outward of the screw groove 285. In addition, in an example, a diameter (largest diameter, smallest diameter, center diameter, or average diameter) of the inner ring raceway surface 250 is set to be approximately the same as an outer diameter (largest diameter, smallest diameter, center diameter, or average diameter) of the first part 281. In another example, the diameter of the inner ring raceway surface 250 is set to be larger or smaller than the outer diameter of the first part 281.

For example, when the largest diameter of the inner ring raceway surface 250 (diameter of a large diameter portion) is defined as D1 and the outer diameter of the first part 281 is defined as D2, D1/D2 is larger than 0.5 and is 0.6, 0.7, 0.8, 0.9, 1.0, 1.1, 1.2, 1.3, 1.4, 1.5, 1.6, 1.7, 1.8, 1.9, 2.0, 2.5, 3.0, 3.5, 4.0, or smaller. In an example, D1/D2 is set to be approximately 0.6 to 2.0. In another example, D1/D2 is set to be approximately 0.8 to 1.2. In another example, ratios other than those described above can be set. The foregoing numerical values are examples and are not limited thereto.

In addition, for example, when an average radial thickness in a formation range of the inner ring raceway surface 250 is defined as T1 and an average radial thickness of the first part 281 is defined as T2, T1/T2 is larger than 0.1 and is 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.5, 3.0, or smaller. In an example, T1/T2 is set to be approximately 0.4 to 2.0. In another example, T1/T2 is set to be approximately 0.5 to 1.5. In another example, ratios other than those described above can be set. The foregoing numerical values are examples and are not limited thereto.

As shown in FIG. 16, the second part 282 has a first flange (large flange) 251 and a second flange (small flange) 252. The first flange 251 has a relatively large outer diameter, and the second flange 252 has a relatively small outer diameter. A groove (recessed portion) 253 is provided between the first flange 251 and the second flange 252 in the axial direction, and the inner ring raceway surface 250 is provided on a bottom surface of the groove 253. The first flange 251 has the axial end surface (outer axial end surface) 415 facing in the first direction. The second flange 252 has an axial end surface (outer axial end surface) 417 facing in the second direction. In an example, the axial end surface 417 is an axial end surface (axial end surface in the second direction) of the nut 22. In another example, the nut 22 can have an axial end surface different from the axial end surface 417 of the second flange 252.

The inner ring raceway surface 250 is a so-called tapered surface and is inclined with respect to a central axis 800. A straight line passing through the inner ring raceway surface 250 and along the inner ring raceway surface 250 intersects the central axis 800 at a reference point 850. The reference point 850 coincides with a vertex of a cone having the inner ring raceway surface 250 as a side surface. In an example, the reference point 850 is disposed at a position away from the axial end surface (axial end surface in the second direction) 417 of the nut 22 in the second direction. In another example, the reference point 850 is disposed at the same position as the axial end surface (axial end surface in the second direction) 417 of the nut 22 or at a position away from the axial end surface 417 in the first direction. The inner ring raceway surface 250 is positioned between the screw groove 285 of the nut 22 and the reference point 850. In the tapered roller bearing 40 shown in FIG. 15, a vertex of a cone defined by the inner ring raceway surface 250, a vertex of a cone related to the tapered rollers 43, and a vertex of a cone related to the outer ring raceway surface 350 are designed so as to converge at the reference point 850 (FIG. 16).

In the present embodiment, an outer ring member 242 is attached to the housing 30. Additionally and/or alternatively, various structures including another member (not shown) (thrust collar, C-shaped retaining ring, annular plate, or the like) for supporting a position of the outer ring member 242 relative to the housing 30 in the axial direction can be applied.

In the present embodiment, an axial load from the ball screw 20 is received by the housing 30 via the tapered rollers 43 and the outer ring member 242. In the ball screw device 610, similarly to the first embodiment, even when a high axial load acts, rotational motion of the rotating body (second assembly, inner assembly) 70 such as the nut 22 relative to the support body (first assembly, outer assembly) 60 is stably supported. The ball screw device 610 according to the present embodiment is preferably applied to high-load specifications and is advantageous for downsizing.

In the present embodiment, similarly to the first embodiment, the ball screw 20 or the bearing 40 includes the sliding member (restriction member) 50. In the present embodiment, axial relative movement of the bearing 40 is restricted by the sliding member (restriction member) 50, whereby high reliability and long life are achieved while a compact configuration and a high-load specification are attained.

In the present embodiment, the inner ring raceway surface 250 is provided in the nut 22 of the ball screw 20. In other words, the ball screw device 610 has a configuration in which the nut 22 and the inner ring of the bearing 40 are integrally formed. The ball screw device 610 is advantageous for downsizing compared to a configuration in which an inner ring of the bearing as a separate member is attached to the nut 22.

In the present embodiment, the tapered roller bearing 40 has a structure that is relatively easily detachable in the axial direction. The ball screw device 610 is advantageous for reduction in assembly man-hours. For example, the support body 60 and the ball screw 20 are relatively easily assembled by axially moving the ball screw 20 in the second direction relative to the support body 60. In addition, the ball screw 20 is relatively easily detached from the support body 60 by axially moving the ball screw 20 in the first direction relative to the support body 60. In this manner, as modification examples of respective forms shown in FIGS. 1, 2, and 5 to 10, a configuration in which the nut 22 of the ball screw 20 and the inner ring of the bearing 40 are integrally formed can be adopted. In addition, in such an integrated form, as shown in FIG. 17, a configuration in which an angular ball bearing is applied instead of a tapered roller bearing as the bearing 40 can be adopted.

### (Fifteenth embodiment)

FIG. 18 is a schematic cross-sectional view showing a ball screw device 680 according to a fifteenth embodiment, as a modification example of the eighth embodiment (FIG. 11). In the present embodiment, the inner ring of the bearing 40 is formed integrally with the screw shaft 21 of the ball screw 20. In the present embodiment, the ball screw device 680 is configured such that the screw shaft 21 of the ball screw 20 relatively rotates with respect to the housing 30.

In the present embodiment, the inner ring raceway surface 250 is provided in the screw shaft 21 (shaft main body 270) of the ball screw 20. The outer ring member 242 of the bearing 40 is attached to the housing 30. The tapered rollers 43 are disposed between the inner ring raceway surface 250 of the screw shaft 21 and the outer ring raceway surface 350 of the outer ring member 242.

The shaft main body 270 has a first part 271 provided with the screw groove 275, and a second part 272 provided with the inner ring raceway surface 250. Both the screw groove 275 and the inner ring raceway surface 250 are formed in the shaft main body 270. The screw shaft 21 has the shaft main body 270 in which the screw groove 275 and the inner ring raceway surface 250 are integrally provided. The screw groove 275 and the inner ring raceway surface 250 are formed in a material of the shaft main body 270. In an example, the first part 271 and the second part 272 are disposed side by side in the axial direction. In another example, at least a part of the second part 272 is disposed so as to overlap the first part 271 in the axial direction. For example, the entirety of the inner ring raceway surface 250 or at least a part of the inner ring raceway surface 250 may be installed at the same position as the screw groove 275 in the axial direction. In addition, the entirety of the inner ring raceway surface 250 or at least a part of the inner ring raceway surface 250 may be disposed radially outward of the screw groove 275. In addition, in an example, the diameter (largest diameter, smallest diameter, center diameter, or average diameter) of the inner ring raceway surface 250 is set to be larger than an outer diameter (largest diameter, smallest diameter, center diameter, or average diameter) of the first part 271. In another example, the diameter of the inner ring raceway surface 250 is set to be approximately equal to or smaller than the outer diameter of the first part 271.

In the present embodiment, similarly to the tenth embodiment, the ball screw 20 or the bearing 40 includes the sliding member (restriction member) 53. In the present embodiment, axial relative movement of the bearing 40 is restricted by the sliding member (restriction member) 53, whereby high reliability and long life are achieved while a compact configuration and a high-load specification are attained.

In the present embodiment, the inner ring raceway surface 250 is provided in the screw shaft 21 of the ball screw 20. The ball screw device 680 has a configuration in which the screw shaft 21 and the inner ring of the bearing 40 are integrally formed. The ball screw device 680 is advantageous for downsizing compared to a configuration in which an inner ring of the bearing as a separate member is attached to the screw shaft 21.

In the present embodiment, the tapered roller bearing 40 has a structure that is relatively easily detachable in the axial direction. The ball screw device 680 is advantageous for reduction in assembly man-hours. For example, the support body 60 and the ball screw 20 are relatively easily assembled by axially moving the ball screw 20 in the second direction relative to the support body 60. In addition, the ball screw 20 is relatively easily detached from the support body 60 by axially moving the ball screw 20 in the first direction relative to the support body 60. In this manner, as modification examples of respective forms shown in FIGS. 11 to 14, a configuration in which the screw shaft 21 of the ball screw 20 and the inner ring of the bearing 40 are integrally formed can be adopted. In addition, in such an integrated form, as shown in FIG. 19, a configuration in which an angular ball bearing is applied instead of a tapered roller bearing as the bearing 40 can be adopted.

The technical scope of the present invention is not limited to the scope described in the embodiments. Various modifications or improvements can be added to the embodiments. Forms obtained by adding such modifications or improvements may also be included in the technical scope of the present invention. In addition, the invention is not limited to the described embodiments, and any combination of these configurations may be adopted.

The present disclosure may also be the following combinations.
(1) In an embodiment, a ball screw device includes a ball screw having a screw shaft, a nut, and a plurality of balls; a housing supporting the ball screw; and a bearing having an inner ring, an outer ring, and a plurality of rolling elements. The bearing is disposed between the ball screw and the housing, and has a structure capable of receiving a radial load and an axial load. The housing has a first axial surface facing in a first direction and a second axial surface facing in a second direction. An axial load from the ball screw in the second direction is received on the first axial surface via the inner ring, the rolling elements, and the outer ring. The bearing or the ball screw has a third axial surface disposed so as to face the second axial surface. The second axial surface and the third axial surface face and abut each other or face each other with a clearance therebetween. Relative movement in a circumferential direction occurs between the second axial surface and the third axial surface during rotation of the screw shaft or the nut relative to the housing. Axial relative movement of the inner ring in the first direction relative to the outer ring is restricted based on an axial positional relationship between the second axial surface and the third axial surface.
(2) In the ball screw device according to the foregoing (1), contact between the second axial surface and the third axial surface is allowed.
(3) In the ball screw device according to the foregoing (1) or (2), sliding between the second axial surface and the third axial surface is allowed.
(4) In the ball screw device according to the foregoing (3), a state of the sliding changes in accordance with a magnitude of the axial load from the ball screw.
(5) In the ball screw device according to any one of the foregoing (1) to (4), the bearing or the ball screw has an axial surface serving as the third axial surface formed in a main body of the bearing, the screw shaft, or the nut, or includes a sliding member having the third axial surface as a separate member from the main body of the bearing, the screw shaft, or the nut.
(6) In the ball screw device according to any one of the foregoing (1) to (4), the housing has an axial surface serving as the second axial surface formed in a main body of the housing, or includes a sliding member having the second axial surface as a separate member from the main body of the housing.
(7) The ball screw device according to any one of the foregoing (1) to (6) further includes a preload member applying a preload such that the second axial surface and the third axial surface approach each other.
(8) In the ball screw device according to any one of the foregoing (1) to (7), the bearing is a single-row tapered roller bearing or a single-row angular ball bearing.
(9) In the ball screw device according to any one of the foregoing (1) to (8), the screw shaft and the inner ring are integrally formed, or the nut and the inner ring are integrally formed.
(10) In the ball screw device according to the foregoing (9), the ball screw is assembled so as to be removable in the first direction relative to the housing. An axial load from the ball screw in the second direction is received by the housing.
(11) In another embodiment, a ball screw device includes a ball screw having a screw shaft, a nut, and a plurality of balls; and a support body supporting the ball screw. The ball screw has an inner ring raceway surface provided on the screw shaft or the nut. The support body has an outer ring raceway surface. The screw shaft or the nut is formed integrally with the inner ring raceway surface. A plurality of tapered rollers serving as rolling elements are disposed between the inner ring raceway surface and the outer ring raceway surface.
(12) In the ball screw device according to the foregoing (11), the ball screw is assembled to the support body so as to be detachable in a first direction. An axial load from the ball screw in a second direction is received by the support body.
(13) In the ball screw device according to the foregoing (11) or (12), the ball screw has a first axial surface facing in the first direction, and the support body has a second axial surface facing in the second direction. Relative movement in a circumferential direction occurs between the first axial surface and the second axial surface during rotation of the screw shaft or the nut relative to the support body. Axial relative movement of the ball screw in the first direction relative to the support body is restricted based on an axial positional relationship between the first axial surface and the second axial surface.
(14) In the ball screw device according to any one of the foregoing (11) to (13), contact between the first axial surface and the second axial surface is allowed.
(15) In the ball screw device according to any one of the foregoing (11) to (14), sliding between the first axial surface and the second axial surface is allowed.
(16) In the ball screw device according to the foregoing (15), a state of the sliding changes in accordance with a magnitude of the axial load from the ball screw.
(17) In the ball screw device according to any one of the foregoing (11) to (16), the ball screw has an axial surface serving as the first axial surface formed in a main body of the screw shaft or the nut, or includes a restriction member having the first axial surface as a separate member from the main body of the screw shaft or the nut.
(18) In the ball screw device according to any one of the foregoing (11) to (17), the support body has an axial surface serving as the second axial surface formed in a main body of the support body, or includes a restriction member having the second axial surface as a separate member from the main body of the support body.
(19) The ball screw device according to any one of the foregoing (11) to (18) further includes a preload member applying a preload such that the first axial surface and the second axial surface approach each other.

### REFERENCE SIGNS LIST

11 to 17, 81 to 86, 610, 680 Ball screw device
20 Ball screw
21 Screw shaft
22 Nut
30 Housing
40 Bearing
41 Inner ring
42 Outer ring
43 Rolling element
50, 53, 54 Sliding member (sliding bearing, restriction member)
60 First assembly
70 Second assembly
80 Preload member
242 Outer ring member
250 Inner ring raceway surface
350 Outer ring raceway surface
900 Clearance
AX1 First axial surface
AX2 Second axial surface
AX3 Third axial surface

## Claims

1. A ball screw device comprising:
a ball screw having a screw shaft, a nut, and a plurality of balls;
a housing supporting the ball screw; and
a bearing having an inner ring, an outer ring, and a plurality of rolling elements,
wherein the bearing is disposed between the ball screw and the housing, and has a structure capable of receiving a radial load and an axial load,
the housing has a first axial surface facing in a first direction and a second axial surface facing in a second direction,
an axial load from the ball screw in the second direction is received on the first axial surface via the inner ring, the rolling elements, and the outer ring,
the bearing or the ball screw has a third axial surface disposed so as to face the second axial surface,
relative movement in a circumferential direction occurs between the second axial surface and the third axial surface during rotation of the screw shaft or the nut relative to the housing, and
axial relative movement of the inner ring in the first direction relative to the outer ring is restricted based on an axial positional relationship between the second axial surface and the third axial surface.

2. The ball screw device according to claim 1,
wherein contact between the second axial surface and the third axial surface is allowed.

3. The ball screw device according to claim 1 or 2,
wherein sliding between the second axial surface and the third axial surface is allowed.

4. The ball screw device according to claim 3,
wherein a state of the sliding changes in accordance with a magnitude of the axial load from the ball screw.

5. The ball screw device according to any one of claims 1 to 4,
wherein the bearing or the ball screw has an axial surface serving as the third axial surface formed in a main body of the bearing, the screw shaft, or the nut, or includes a sliding member having the third axial surface as a separate member from the main body of the bearing, the screw shaft, or the nut.

6. The ball screw device according to any one of claims 1 to 4,
wherein the housing has an axial surface serving as the second axial surface formed in a main body of the housing, or includes a sliding member having the second axial surface as a separate member from the main body of the housing.

7. The ball screw device according to any one of claims 1 to 6, further comprising:
a preload member applying a preload such that the second axial surface and the third axial surface approach each other.

8. The ball screw device according to any one of claims 1 to 7,
wherein the bearing is a single-row tapered roller bearing or a single-row angular ball bearing.

9. The ball screw device according to any one of claims 1 to 8,
wherein the screw shaft and the inner ring are integrally formed, or the nut and the inner ring are integrally formed.

10. The ball screw device according to claim 9,
wherein the ball screw is assembled so as to be removable in the first direction relative to the housing, and
an axial load from the ball screw in the second direction is received by the housing.
